(19) **Europäisches Patentamt**

**European Patent Office**

**Office européen des brevets**

(11) **EP 1 206 137 A1**

(12) **EUROPEAN PATENT APPLICATION**
published in accordance with Art. 158(3) EPC

(43) Date of publication:
**15.05.2002 Bulletin 2002/20**

(51) Int Cl.⁷: **H04N 5/92**, G11B 20/10

(21) Application number: **00946337.3**

(86) International application number:
**PCT/JP00/04746**

(22) Date of filing: **14.07.2000**

(87) International publication number:
**WO 01/06780 (25.01.2001 Gazette 2001/04)**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.07.1999 JP 20305699**

(71) Applicant: **MATSUSHITA ELECTRIC INDUSTRIAL CO., LTD.**
**Kadoma-shi, Osaka 571-8501 (JP)**

(72) Inventors:
• **KOISHI, Kenji**
  **Sanda-shi, Hyogo 669-1321 (JP)**
• **OHARA, Shunji**
  **Higashiosaka-shi, Osaka 578-0963 (JP)**

(74) Representative: **Eisenführ, Speiser & Partner**
**Martinistrasse 24**
**28195 Bremen (DE)**

(54) **OPTICAL DISK, OPTICAL DISK RECORDING/REPRODUCING APPARATUS, AND RECORDING/REPRODUCING METHOD**

(57) A recording method of the invention is for time-division multiplexing and recording N channels of video data such as broadcasting onto an optical disk. In the method, a data compression ratio for video data on each channel is determined so that a total amount of data on N channels to be recorded in unit time is substantially constant regardless of the number (N) of channels. Then, the data is compressed at the compression ratio to be recorded. Alternately, in the method, the video data is recorded onto an optical disk by a method in which intervals of frames to be recorded is determined so that a total amount of data on the N channels to be recorded in a unit time becomes substantially constant regardless of the number of channels (N). Then, the frames on each channel are thinning out to cause intervals of the frame to become the determined intervals of frames, resulting in recording of the video data on each channel onto the optical disk.

Fig.1A a-CHANNEL ENCODED DATA

Fig.1B b-CHANNEL ENCODED DATA

Fig.1C c-CHANNEL ENCODED DATA

Fig.1D CHANNEL DETERMINATION AND RECORDING FOR EACH FRAME

Fig.1E a-CHANNEL PLAYBACK

Fig.1F b-CHANNEL PLAYBACK

Fig.1G c-CHANNEL PLAYBACK

## Description

TECHNICAL FIELD

The present invention relates to an optical disk on which multi-channel video information is multiplexed and recorded, and further to a method and an apparatus for multiplexing multi-channel video information and recording it onto the optical disk.

BACKGROUND ART

Optical disks such as DVD-RAMs are expected to be widely usable as mass storage devices in multimedia applications. The optical disks can be used as media that replace conventional videotapes to record received broadcast programs.

In a background in which the digital broadcasting would be increasingly used in the future, it is expected that the optical disk would be used to synchronously receive multi-channel programs and to synchronously record multi-channel programs.

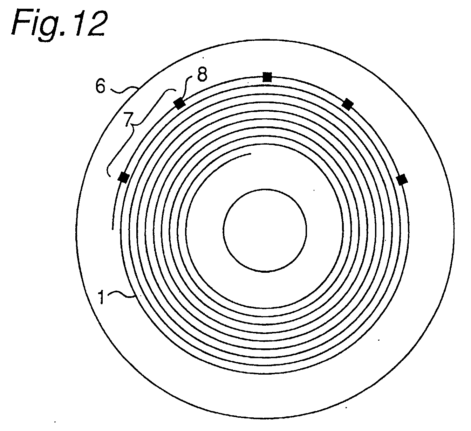

An optical disk for recording video information has a track structure as shown in Fig. 12. An optical disk 6 is formed of a material such as polycarbonate, and has a track 1 formed to have a structure including a spiral concave groove. The optical disk having such the structure has a recording film formed thereon. A laser beam is radiated onto the recording film to record information in the form of record marks. More specifically, while tracking servo is applied, video data and audio data in the video information are thereby sequentially arranged and recorded onto the track 1.

The track 1 has a recording field partitioned in a plurality of sector fields 7 each having a specific length of data field in which video information is to be recorded. On the top of each of the sector field 7, an address field 8 is prearranged with, for example, convex and concave portions and embossed pits of a groove.

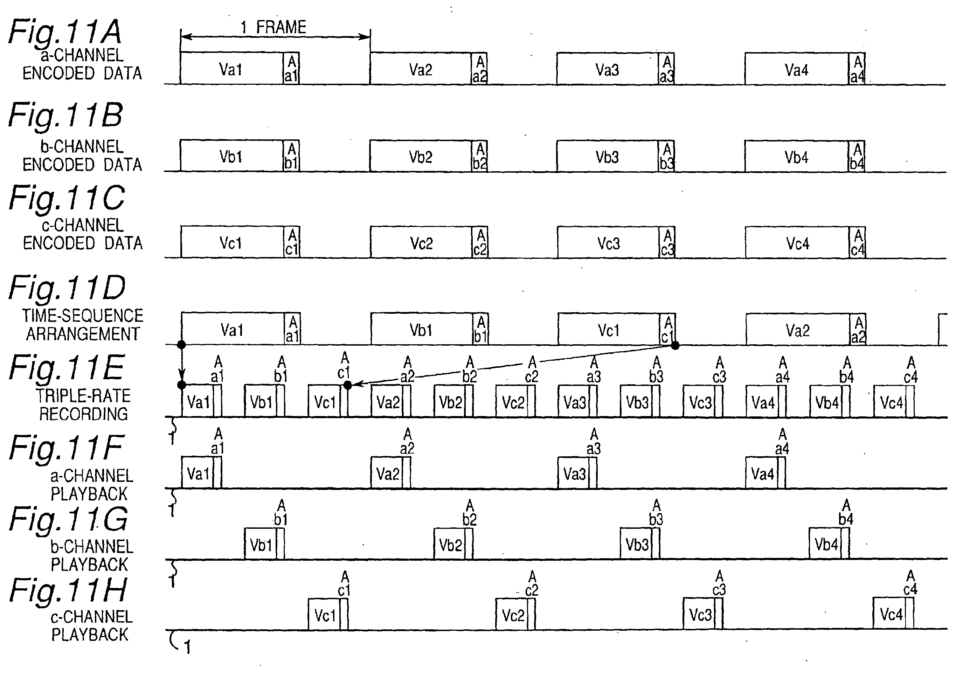

An example conceivable as a method of performing video-recording for multi-channel broadcast programs on the track 1 of the above-described optical disk 6 will hereinbelow be described with reference to Figs. 11A to 11H.

Figs. 11A to 11H are explanatory views showing a method of recording video information onto an optical disk, and a recording format. In more specific, Figs. 11A to 11H explains an example case where video information in broadcast programs of three selected channels (a-channel, b-channel and c-channel) is synchronously recorded onto an optical disk.

Fig. 11A shows a state where video information in the selected a-channel is encoded to blocks each representing a data signal in units of frames. Figs. 11B and 11C also show states where video information on the individual selected channels is encoded to blocks each representing one-frame-unit data signal.

Regarding the notation of "Xyz" in Figs. 11A to 11H, the first symbol "X" represents video data when it is "V", and represents audio data when it is "A". The second symbol "y" represents a y-channel broadcast program, and the last symbol "z" represents a z-th frame. For example, "Va1" represents video data in a first frame of the a-channel. Similarly, "Aa1" represents audio data in the first frame of the a-channel.

Figs. 11A, 11B, and 11C show time sequences of encoded video data and audio data on the respective a-channel, b-channel, and c-channel.

Ordinary recording is performed through a single record head, that is, one-channel record head. Hence, the following method of recording data by performing time-wise multiplexing when synchronously recording three channels. In specific, all the blocks of data encoded in units of each channel as shown in Figs. 11A, 11B, and 11C are sequentially arranged in time series on the same time axis. For example, as shown in Fig. 11D, video data and audio data are arranged in the order of Va1/Aa1, Vb1/Ab1, Vc1/Ac1, Va2/Aa2,···.

However, in such a simple sequential time-series arrangement of the three-channel data, the amount of data to be recorded per unit time increases three times, and hence the data cannot be recorded in the optical disk at a recording data rate as it is. To implement such recording, the receding data rate of an optical disk device must be heightened substantially three times to complete a recording operation for the three-channel data within a one-frame time (Such the recording operation hereinbelow will be referred to as a "triple-rate recording operation".). In specific, as shown in Fig. 11E, the recording rate is increased substantially three times, and the data is sequentially recorded onto the track 1 of the optical disk 6.

The three-channel video data and audio data thus recorded are reproduced as follows. When three-channel data is recorded in the manner of triple-rate recording operation, reproduction (playback) operation has to be done at the triple rate. For example, as shown in Fig. 11F, to reproduce (play back) the a-channel, only the data in Va1/Aa1, Va2/Aa2, Va3/Aa3, and Va4/Aa4 need to be selected and reproduced sequentially and intermittently at the triple rate. Similarly, as shown in Fig. 11G, to reproduce the b-channel, only the data in Vb1/Ab1, Vb2/Ab2, Vb3/Ab3, and Vb4/Ab4 need to be selected and reproduced sequentially and intermittently at the triple rate. Similarly, as shown in Fig. 11H, to reproduce the b-channel, only the data in Vc1/Ac1, Vc2/Ac2, Vc3/Ac3, and Vc4/Ac4 need to be selected and reproduced sequentially and intermittently at the triple rate.

DISCLOSURE OF THE INVENTION

(Problems to be solved by the Invention)

With the configuration as described above, as the number of selected channels for video information increases, data rate of reproducing the optical disk device needs to be increased by the channel-number multiple. This requires a mechanism dedicated for driving an optical disk at a high speed as well as an optical disk having a property capable of performing high-rate recording. Generally, increase in recording data rate of an optical disk device requires complicated configuration elements of the apparatus, and causes the manufacturing cost to raise. Because of those factors and the nature of the recording material for the optical disk, the increase of recording data rate cannot easily be implemented.

In view of the above-described problems, the present invention is directed to provide an optical disk recording/reproducing method, an optical disk recording/reproducing apparatus, and an optical disk in which video information on selected N channels (N is an integer) can be recorded/reproduced at a constantly maintained recording/reproducing data rate of an optical disk device.

(Means for solving the Problems)

A recording method according to the present invention is a method of recording video data on N (N is an integer) channels synchronously onto an optical disk, in which the video data is formed of a time series of video frames. The method comprises: determining a compression ratio for each channel so that a total data amount for the N channels of video data after compression that is recorded during a record time T is less than or equal to a data amount that can be recorded at a maximum recording rate of the optical disk during the record time T; compressing the video data in units of frames in each channel at the determined compression ratio; and recording the compressed data onto the optical disk. The record time T being a minimum time of record times individually comprising at least one video frame for each channel. The video data is recorded onto the optical disk so that a total amount of data on the N channels to be recorded in a unit time is substantially constant regardless of the number of channels to be recorded.

In the method, the compression ratio for the video data on each channel may be set to 1/N.

The method may further comprise determining an allocation ratio of the data amount to be recorded for each channel in the record time T to all data to be recorded in the record time T according to contents of the video data on each channel. In this case, the compression ratio for each channel may be determined according to the determined allocation ratio.

In the method, when the video data to be recorded includes attribute data indicating the contents of the video data, the attribute data may be detected from the video data. The contents of the video data on each channel may be determined according to the detected attribute data.

In the method, when the video data on each channel is accompanied by audio data synchronizing therewith, the determining may determine the compression ratio for the video data on each channel so that a total data amount for N channels of video and audio data after compression that is recorded during the record time T is substantially constant regardless of the input number of channels. The method may comprise arranging the video compressed at the determined compression ratio and audio data into each frame in a predetermined order, to thereby record the data onto the optical disk.

When the individual video data on the N channels (N is an integer) in the predetermined record time is to be synchronously recorded onto the optical disk, the method may further comprise computing a total data amount of video data on the N channels to be recorded in the predetermined record time, and a capacity of free area of the optical disk in which data can be recorded. In this case, the compression ratio may be determined so that the total amount of data to be recorded is less than or equal to the capacity of free area of the optical disk in which data can be recorded.

An another recording method according to the invention is a method of recording video data of N (N is an integer) channels synchronously onto an optical disk, in which the video data is formed of a time series of video frames. The method comprises: selecting one of the N channels in units of video frames, as a channel of which video data is recorded; and recording the video data in the video frame on the selected channel onto the optical disk. N channels of the video data are time-division multiplexed in units of video frames and recorded onto the optical disk.

In the above another method, when each of the video data on the N channels (N is an integer) in a predetermined record time is to be synchronously recorded onto the optical disk. The method comprises: computing a total data amount for the N channels of video data to be recorded in the predetermined record time, and a capacity of free area of the optical disk in which data can be recorded; comparing the total data amount to be recorded with the capacity of free area of the optical disk; and determining, when the total data amount to be recorded is greater than the capacity amount of the optical disk, the number of the video frames to be recorded in a predetermined time so that in at least one of the N channels the total data amount to be recorded is less than or equal to the capacity of free are of the optical disk.

A reproducing method according to the invention is a method of reproducing recorded data from an optical disk onto which N channels (N is an integer) of video data are compressed at a predetermined compression ratio and arranged in a predetermined channel order to thereby be recorded. The method comprises: inputting information for designating a channel to be reproduced; reading data from the optical disk in units of frames; reproducing video data on the designated channel to be reproduced from the video data recorded in the read frame, after the video data is decompressed; and reproducing audio data that is included in the read frame and is on the channel to be recorded.

An another reproducing method according to the invention is a method of reproducing recorded data from an optical disk having an area in which video data on N channels (N is an integer) is recorded in units of frames by a time-division multiplexing method. The optical disk stores the video data selected in every predetermined number of frames on one channel, and audio data on all channels continuous to the video data. The method comprising: inputting information for designating a channel to be reproduced; reading data from the optical disk in units of frames; and if video data included in the read frame is video data of designated channel to be reproduced, then reproducing the video data, and further reproducing audio data that is included in the read frame and is on the designated channel to be recorded.

An optical disk according to the invention is an optical disk having an area in which video data on N channels (N is an integer) are recorded in units of frames by a time-division multiplexing method. The disk comprises a frame area which is provided corresponding to a video frame series in one channel and in which video data on each channel is multiplexed and recorded in units of video frames. The frame area has a data length equal to a total for N channels of data length in one frame of video data which is compressed at a predetermined compression ratio. The predetermined compression ratio is determined so that a total data amount for the N channels of video data to be recorded during a record time T is less than or equal to a data amount that can be recorded during the record time T at a maximum recording rate of the optical disk. The record time T is a minimum time in record times individually including at least one video frame for each channel.

An another optical disk according to the invention is an optical disk having an area in which video data of N (N is an integer) channels are recorded synchronously onto an optical disk. The video data is formed of a time series of video frames. One of the N channels is selected as a channel of which video data is to be recorded, in units of video frames. An area for recording the video data in the video frame on the selected channel onto the optical disk is arranged on a track of the optical disk.

A recording apparatus according to the invention is an apparatus for recording video data on N (N is an integer) channels synchronously onto an optical disk, the video data formed of a time series of video frames. The apparatus comprises: a section that determines a compression ratio for each channel so that a total data amount for the N channels of video data after compression that is recorded during a record time T is less than or equal to a data amount that can be recorded at a maximum recording rate of the optical disk during the record time T; a section that compresses the video data in units of frames in each channel at the determined compression ratio; and a section that records the compressed data onto the optical disk. The record time T is a minimum time of record times individually comprising at least one video frame for each channel. The video data is recorded onto the optical disk so that a total amount of data on the N channels to be recorded in a unit time is substantially constant regardless of the number of channels to be recorded.

An another recording apparatus according to the invention is an apparatus for recording video data of N (N is an integer) channels synchronously onto an optical disk. The video data is formed of a time series of video frames. The apparatus comprises: a section that selects one of the N channels in units of video frames, as a channel of which video data is recorded; and a section that records the video data in the video frame on the selected channel onto the optical disk. N channels of the video data are time-division multiplexed in units of video frames and recorded onto the optical disk.

A reproducing apparatus according to the invention is an apparatus for reproducing recorded data from an optical disk onto which N channels (N is an integer) of video data are compressed at a predetermined compression ratio and arranged in a predetermined channel order to thereby be recorded. The apparatus comprises: a section that inputs information for designating a channel to be reproduced; a section that reads data from the optical disk in units of frames; and a section that reproduces video data on the designated channel to be reproduced from the video data recorded in the read frame, after the video data is decompressed, and audio data that is included in the read frame and is on the channel to be recorded.

An another reproducing apparatus according to the invention is an apparatus for reproducing recorded data from an optical disk having an area in which video data on N channels (N is an integer) is recorded in units of frames by a time-division multiplexing method. The optical disk stores the video data selected in every predetermined number of frames on one channel, and audio data on all channels continuous to the video data. The apparatus comprises: a section that inputs information for designating a channel to be reproduced; a section that reads data from the optical disk in units of frames; and a section that, if video data included in the read frame is video data of designated channel to be reproduced, then reproduces the video data, and audio data that is included in the read frame and is on the designated channel to be recorded.

(Advantageous to the Related Art)

According to the present invention, regardless of the number of selected video channels, video data on an arbitrary number of channels can be recorded onto an optical disk at a recording rate of the optical disk that is substantially fixedly maintained. In addition, at a recording rate of the optical disk that is substantially fixedly maintained, video data on an arbitrary number of channels can be recorded on the optical disk; moreover, depending on the contents of video information, a specific channel desired by a viewer/listener can be recorded/reproduced to produce higher video quality. Moreover, video data on an arbitrary number of channels as well as audio data that less deteriorates in audio quality can be recorded on the optical disk. Furthermore, regardless of a remaining data capacity, video data on selected multiple video channels can be recorded in a period up to the end of broadcast program.

BRIEF DESCRIPTION OF THE DRAWINGS

Figs. 1A to 1G are explanatory views of a recording method and a data arrangement on an optical disk according to Embodiment 1 of the present invention;
Fig. 2 is a configuration view of an optical disk recording/reproducing apparatus according to the present invention;
Figs. 3A to 3G are explanatory views of a recording method and a data arrangement on an optical disk according to Embodiment 2 of the present invention;
Figs. 4A to 4D are explanatory views of a recording method and a data arrangement on an optical disk according to Embodiment 3 of the present invention;
Figs. 5A to 5G are explanatory views of a recording method and a data arrangement on an optical disk according to Embodiment 4 of the present invention;
Fig. 6 is a configuration view of another optical disk recording/reproducing apparatus according to the present invention;
Figs. 7A to 7G are explanatory views of a recording method and a data arrangement on an optical disk according to Embodiment 5 of the present invention;
Figs. 8A to 8D are explanatory views of a recording method and a data arrangement on an optical disk according to Embodiment 6 of the present invention;
Figs. 9A to 9H are explanatory views of a recording method and a data arrangement on an optical disk according to Embodiment 7 of the present invention;
Figs. 10A to 10H are explanatory views of an optical disk recording method and data arrangement according to Embodiment 8 of the present invention;
Figs. 11A to 11H are views showing a method of recording conventional video information on an optical disk, and record formats; and

Fig. 12 is an explanatory view of a track structure of an ordinary optical disk.

BEST MODE FOR CARRYING OUT THE INVENTION

Hereinbelow, preferred embodiments of an optical disk and an optical disk recording/reproducing apparatus according to the present invention will be described with reference to the accompanying drawings.

<EMBODIMENT 1>

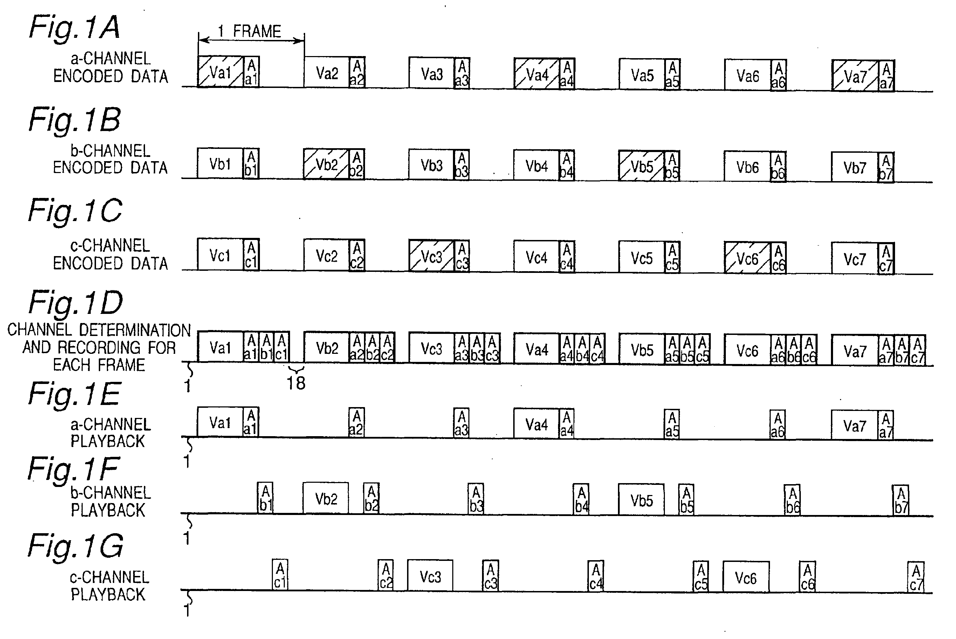

Figs. 1A to 1G are explanatory views of a recording method and a data arrangement on an optical disk according to Embodiment 1 of the present invention.
These figures are explanatory regarding a method of selecting video information in three-channel programs from broadcast programs and recording the video information onto an optical disk loaded into an optical disk device in which the recording rate and the reproducing rate are fixed.
Fig. 1A shows a state where video information on a selected a-channel is encoded to blocks each representing data signal in units of frames. Figs. 1B and 1C also show states where video information on the individual selected channels is encoded to blocks each representing one-screen-unit.
In the notation of "Xyz" in Figs. 1A to 1G, "V" shown as the first symbol "X" represents video data, and "A" shown as the first symbol represents audio data. The second symbol "y" represents a y-channel broadcast program, and the last symbol "z" represents a z-th frame. For example, "Va1" represents video data in a first frame of the a-channel. Similarly, "Aa1" represents audio data in the first frame of the a-channel. (The above notation manner is the same or similar in embodiments described below).
The optical disk of the present embodiment has a track structure that is similar to that of the conventional optical disk shown in Fig. 12.
Hereinbelow, a description will be made regarding a recording method of the present embodiment in which the video data Vxy and the audio data Axy shown in Figs. 1A to 1G are arranged and recorded onto an optical disk 6 having the track structure as shown in Fig. 12.
Fig. 1D is an explanatory view showing a processing state in the recording method of the present embodiment. As shown in the figure, a channel having data to be recorded onto the optical disk is determined from selected three channels, and video data on the determined channel and audio data on all the selected channels are arranged and recorded within a one-frame time onto the track 1 of the optical disk 1.
For example, video data Va1 on the a-channel in a first frame is determined as video data to be recorded, and the video data Va1 is arranged and recorded within the time zone onto the first frame on the track 1 of the optical disk. Subsequently, video data Vb2 on the b-channel in a second frame is determined as video data to be recorded, and the video data Vb2 is arranged and recorded within the time zone of the second frame on the track 1 of the optical disk. Furthermore, video data Vc3 on the c-channel in a third frame is determined as video data to be recorded, and the video data Vc3 is arranged and recorded within the time zone of the third frame on the track 1 of the optical disk.

In a fourth frame, in which one circle of the operations has been completed, video data Va4 on the a-channel is determined, and the video data Va4 is arranged and recorded within the time zone of the fourth frame on the track 1 of the optical disk.

Similarly, the b-channel is determined in a fifth frame, the c-channel is determined in a sixth frame, and a-channel is determined in a seventh frame. Then, video data on each of the determined channels is arranged (time-division multiplexed) and recorded within the time zone of the respective frame on the track 1 of the optical disk.

As described, when video data on three channels are to be selected and recorded, video data on specific channels is recorded onto the track 1 of the optical disk on a basis of three frames.

More specifically, in the method of determining the video channel in each of the frames, video data. on a C-th channel in video information on selected N channels is arranged and recorded at a (mN+C)-th frame within a one-frame time length field of the track of the optical disk, where "m" is "0" or an integer, and "C" is an integer that is equal to 1 or larger and is equal to N or smaller.

As in the above-described case where recording is performed by determining one specific video channel in each frame, the recording can be implemented substantially at a fixed recording rate of the optical disk regardless of the number of selected channels.

Further, regarding audio data synchronizing with frame-unit video data, audio data on all the channels is recorded in each frame regardless of the determined video channels in each frame. The reason thereof is that when audio data is intermittently or reductively recorded as is done for video data, original audio data cannot be reproduced or played back.

For example, the audio data synchronizing with the video data Va1 on the a-channel is Aa1, the audio data synchronizing with the video data Vb1 on the b-channel is Ab1, and the audio data synchronizing with the video data Vc1 on the a-channel is Ac1.

The audio data that have thus synchronized are arranged and recorded as shown in Fig. 1D. In specific, in the first frame, while the a-channel is determined for video data, audio data Aa1, Ab1, and Ac1 on all the channels are recorded. In the second frame, while the b-channel is determined for video data, audio data Aa2, Ab2, and Ac2 on all the channels are recorded. Similarly, in the third frame, while the c-channel is determined for video data, the audio data Aa3, Ab3 and Ac3 on all the channels are recorded.

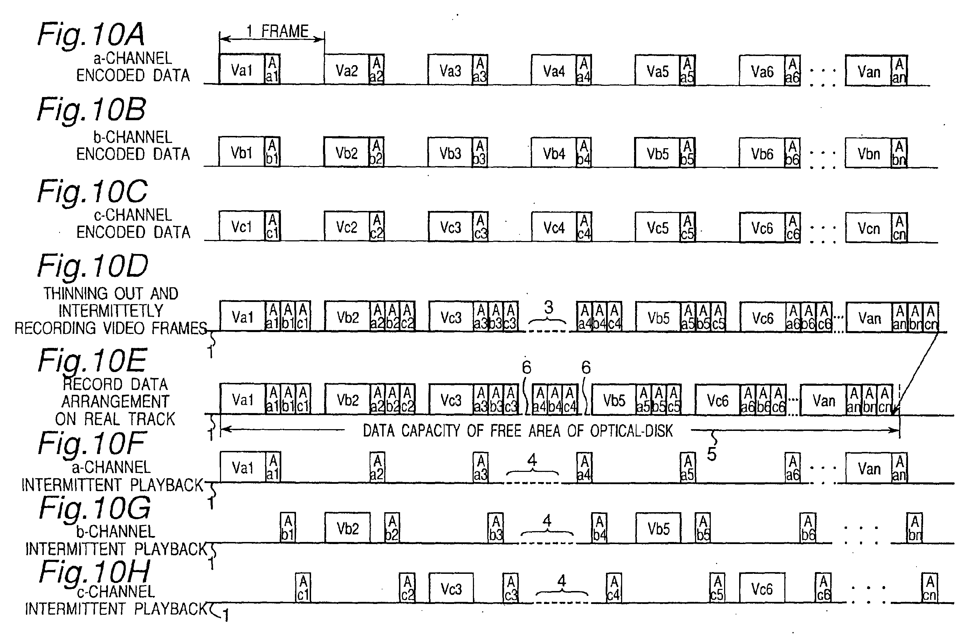

In the case shown in Fig. 1D, gaps 18 which are unrecorded portions are arranged between the record-data frames including the video and audio data. However, as a matter of course, the data may be recorded continually without the gaps 18 between the adjacent record-data frames. In addition, the data may be recorded over different sector fields 7 shown in Fig. 10.

Next, a description will be made regarding a method for playing back video data and audio data arranged and recorded onto the track 1 of the optical disk in a manner as shown in Fig. 1D.

As shown in Fig. 1E, when playing back the a-channel, data selection is individually performed for Va1 and Aa1 in the first frame, Aa2 in the second frame, Aa3 in the third frame, Va4 and Aa4 in the fourth frame, Aa5 in the fifth frame, Aa6 in the sixth frame, and Va7 and Aa7 in the seventh frame. Then, sequential and intermittent reproduction (playback) is performed for the selected data. By performing the sequential reproduction, video data on the a-channel can be intermittently played back in every three frames, and audio data on the a-channel can be played back in all the frames. Hence, the original sounds thereof can be completely reproduced.

Similarly, as shown in Fig. 1F, when playing back the b-channel, data selection is individually performed for Ab1 in the first frame, Vb2 and Ab2 in the second frame, Ab3 in the third frame, Ab4 in the fourth frame, Vb5 and Ab5 in the fifth frame, Ab6 and in the sixth frame, and Ab7 in the seventh frame. Then, sequential and intermittent reproduction is performed to reproduce the selected data. By performing the sequential reproduction, video data on the a-channel can be intermittently reproduced in every three frames, and audio data on the a-channel can be reproduced in all the frames. Hence, the original sounds thereof can be completely reproduced.

Furthermore, as shown in Fig. 1G, when performing playback of the c-channel, data selection is individually performed for Ac1 in the first frame, Ac2 in the second frame, Vc3 and Ac3 in the third frame, Ac4 in the fourth frame, Ac5 in the fifth frame, Vc6 and Ac6 and in the sixth frame, and Ac7 in the seventh frame. Then, sequential and intermittent reproduction is performed to reproduce the selected data. By performing the sequential reproduction, video data on the a-channel can be intermittently played back in units of three frames, and audio data on the a-channel can be played back in all the frames. Hence, the original sounds thereof can be completely reproduced.

When the number of selected channels is small, the number of reduced frames is also small and therefore the number of frames recorded in a unit time is increased. Accordingly, reproduction with smoother motion can be achieved. Thus, regardless of the number of channels selected for recording, the recording rate of the optical disk can be efficiently used.

In the above, the case where video information on three channels has been selected has been described. However, as a matter of course, even when arbitrary N channels are selected, regardless of the number of the selected channels, recording can be implemented substantially at a fixedly maintained recording rate.

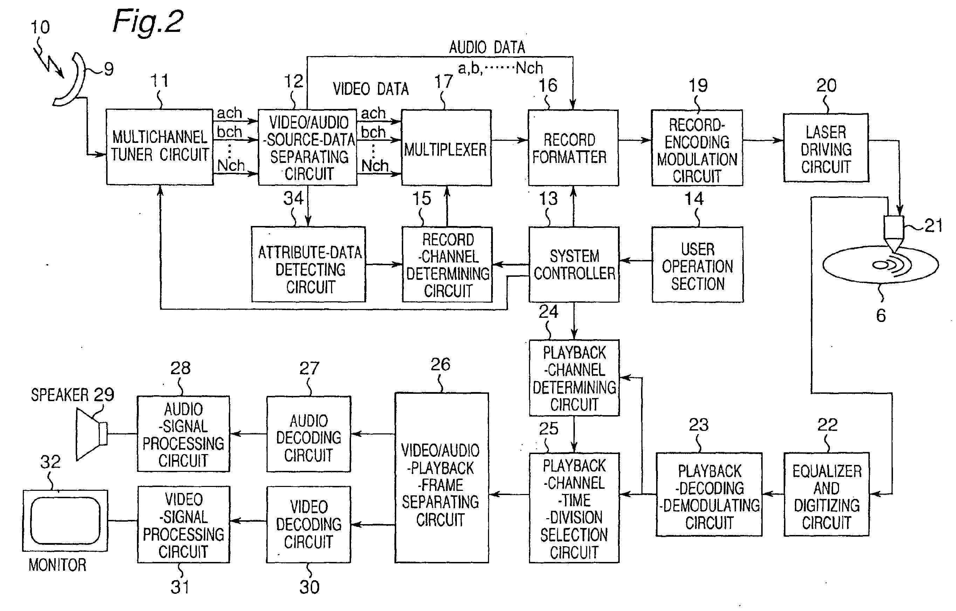

Fig. 2 is an explanatory view of a configuration of an apparatus for recording and/or reproducing data to/from the optical disk by using the recording method described referring to Figs. 1A to 1G (the apparatus hereinbelow will be referred to as an "recording/reproducing apparatus"). The recording/reproducing apparatus includes an antenna 9, a multichannel tuner circuit 11, a video/audio-source-data separating circuit 12, a multiplexer 17, a record formatter 16, a system controller 13, a record-encoding modulation circuit 19, a laser driving circuit 20, and an optical pickup 21. Each of the aforementioned components function primarily in a recording operation for data onto the optical disk 6. In addition, the recording/reproducing apparatus includes, as a reproduction processing circuit system, an equalizer and digitizing circuit 22, a playback-decoding-demodulating circuit 23, a playback-channel determining circuit 24, a playback-channel-time-division selection circuit 25, a video/audio-playback-frame separating circuit 26, an audio decoding circuit 27, an audio-signal processing circuit 28, a video decoding circuit 30, and a video-signal processing circuit 31. Moreover, the recording/reproducing apparatus includes an operation section 14 on which a user performs various setting operations.

Hereinbelow, recording operation of the recording/reproducing apparatus configured as above will be described.

First, the antenna 9 receives a radio signal 10 including programs of a plurality of channels on a broadcast such as digital broadcast. From the received broadcast programs, a user selects programs desired to be recorded onto the optical disk with the operation section 14. Thereby, a relevant command is issued to the system controller 13.

The system controller 13 transfers channel information in the broadcast programs selected by the user to the multichannel tuner circuit 11. The multichannel tuner circuit 11 converts in frequency only radio signals of the channels selected by the user into a base-band digital signals. The encoded video and audio data described with reference to Figs. 1A, 1B, and 1C are output from the multichannel tuner circuit 11.

The video/audio-source-data separating circuit 12 separates video and audio data on the individual channels which have been output from the multichannel tuner circuit 11, into video data and audio data in each frame. The separated audio data on the multiple channels is input to the record formatter 16, and the video data on the multiple channels is input to the multiplexer 17.

Subsequently, the system controller 13 transfers information on the channels that is to be recorded in units of a frame (for example, in the case shown in Fig. 1, information that the individual channels are uniformly recorded in every three frames) to a record-channel determining circuit 15. According to the information received from the system controller 13, the record-channel determining circuit 15 outputs a gate signal for only an interval of frame of the channel determined in units of a frame. Then, the gate signal is used to control the multiplexer 17, and only video signals of the channels to be recorded are selectively output through the multiplexer 17.

Video data selectively output from the multiplexer 17 is represented by a hatched data block in Figs. 1A, 1B, and 1C.

The record formatter 16 couples the video data on the channels selected by the multiplexer 17 to audio data in the individual frames of all the channels, arranges the coupled data, and thereby generates and outputs the coupled data as data arrays that are to be practically recorded on the track 1 of the optical disk (See Fig. 1D).

As described above, by selecting channels containing video data desired to be recorded for each frame, data on an arbitrary multiple number of video channels can be arranged onto the track 1 of the optical disk 6 as shown in Fig. 1D without increasing the recording rate of the optical disk.

Subsequently, the record-encoding modulation circuit 19 modulates binary data output from the record formatter 16 into a modulated code that is to be recorded onto the optical disk 6. The modulated signal is input to the laser driving circuit 20, and a laser beam source in the optical pickup 21 is applied with a pulse modulation according to the modulated signal. Subsequently, the laser beam is reduced by the optical pickup 21 into fine spotlight, and recording-required data as shown in Fig. 1D is recorded onto the track 1 of the optical disk 6.

Hereinbelow, reproduction operation of the recording/reproducing apparatus will be described.

The equalizer and digitizing circuit 22 converts a signal reproduced with the optical pickup 21 from the track 1 of the optical disk 6 into a digital signal. Then, the playback-decoding-demodulating circuit 23 demodulates the digital signal into binary data. An output of the playback-decoding-demodulating circuit 23 is demodulated and output in the form of a data array as shown in Fig. 1D.

Using the operation section 14, a user selects a playback-desired channel desired to be reproduced from video channels recorded on the optical disk 6, and issues a relative command to the system controller 13.

The system controller 13 transfers information for specifying channels selected by the user to the playback-channel determining circuit 24. According to the specifying information received from the system controller 13, the playback-channel determining circuit 24 determines a playback channel. In addition, according to the output received from the playback-decoding-demodulating circuit, the playback-channel determining circuit 24 identifies the interval relating to video data and audio data which includes data on the playback channel, and outputs a gate signal only for the identified interval. In specific, the top of the video and audio data in each frame includes a flag indicating to which channel the data belongs. The playback-channel determining circuit 24 references the flag to thereby identify the channel to which read-out frame data belongs, and outputs a gate signal at the interval of the playback specified channel. Thereafter, according to the gate signal from the playback-channel determining circuit 24, the playback-channel-time-division selection circuit 25 is controlled to select only a video channel signal desired to be reproduced and output. Data arrays of video and audio data of the playback-channel selected and output as described above are formed as shown in Figs. 1E, 1F, and 1G.

Subsequently, the video and audio data selected by the playback-channel-time-division selection circuit 25 is separated in the video/audio-playback-frame separating circuit 26 into audio data and video data. The separated audio data passes through the audio decoding circuit 27 and the audio-signal processing circuit 28 to output sound from a speaker 29. On the other hand, the separated video data passes through the video decoding circuit 30 and the video-signal processing circuit 31 to be displayed on a monitor 32.

As described above, with the recording/reproducing apparatus having the configuration shown in Fig. 2, recording-designated channels are determined in units of a frame. Thereby, recording/reproduction of an arbitrary number of selected video channels can be implemented even though the recording data rate of the recording/reproducing apparatus is constant.

<EMBODIMENT 2>

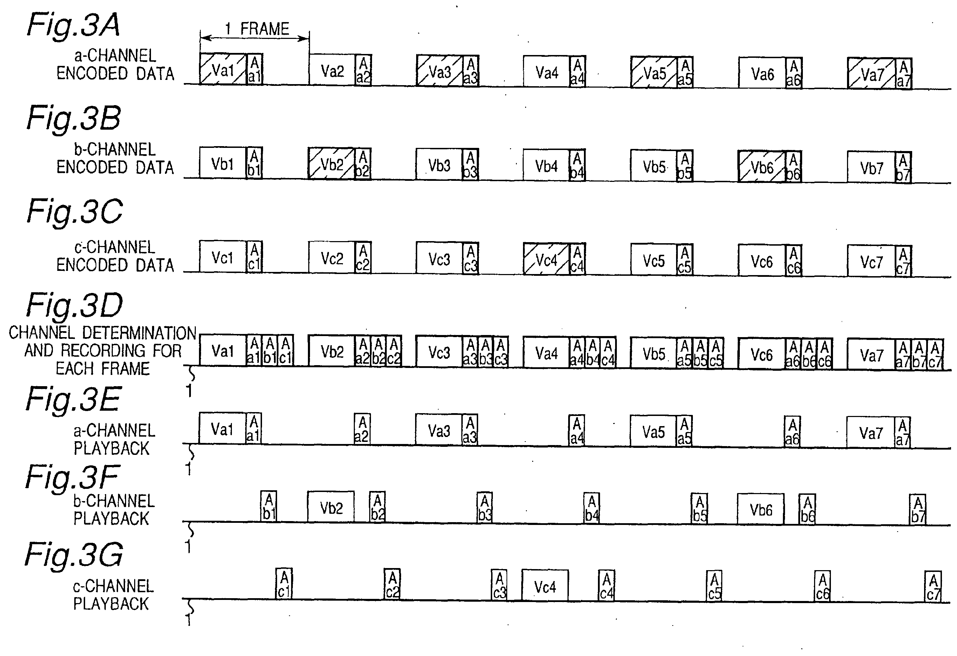

Figs. 3A to 3G are explanatory views regarding an optical disk recording method and optical disk record formats according to Embodiment 2.

In the above-described recording method, video information on three channels is selected, and video data is uniformly selected and recorded in units of three frames in each of the channels. However, the intervals of the frames selected in units of a channel may be changed. This is effective when only a specific channel is desired to be recorded/played back to produce a motion picture of high quality, that is, a motion picture with a smoother motion.

For example, when synchronously recording a movie program on one channel and music programs of two channels, it may be desired that the movie program on one channel is played back with a smoother motion picture than that of the other two music programs.

Hereinbelow, a description will be made regarding a method for implementing reproduction for the a-channel data representing a motion picture that is smoother than those on other b-channel and c-channel.

Fig. 3A shows a state where video information on the selected a-channel is encoded to digital-signal blocks arranged in units of frames. Figs. 3B and 3C each show a state where video information on each on the other channels is encoded to data blocks arranged in units of one screen frame.

As is shown in Fig. 3D, from the three channels, specific recording-desired channels are determined in units of a screen frame. Then, video data on the determined channels are arranged and recorded within a one-frame time onto the track 1 of the optical disk.

To reproduce the a-channel video data with a motion picture smoother than those of the b-channel and the c-channel, as shown in Fig. 3D, the a-channel is recorded onto the track 1 of the optical disk at every three frames, and the b-channel and the c-channel are recorded thereto at every four frames.

More specifically, recording-desired channels are selected as follows. The a-channel is selected for the first frame, the b-channel is selected for the second frame, the a-channel is selected for the third frame, the c-channel is selected for the fourth frame, the a-channel is selected for the fifth frame, the b-channel is selected for the sixth frame, and the a-channel is selected for the seventh frame.

Subsequently, a description will be made regarding a reproducing method for video data and audio data arranged and recorded as shown in Fig. 3D.

As shown in Fig. 3E, to reproduce the a-channel, Va1 and Aa1 are selected in the first frame, Aa2 is selected in the second frame, Va3 and Aa3 are selected in the third frame, Aa4 is selected in the fourth frame, Va5 and Aa5 are selected in the fifth frame, Aa6 is selected in the sixth frame, and Va7 and Aa7 are selected in the seventh frame. Then, the individually selected data is sequentially and intermittently reproduced. By such the sequential reproduction, video data is reductively or intermittently reproduced in every two frames, and audio data can be played back in all frames. Hence, original sounds can be completely reproduced.

Similarly, as shown in Fig. 3F, to reproduce the b-channel, Ab1 is selected in the first frame, Vb2 and Ab2 are selected in the second frame, Ab3 is selected in the third frame, Ab4 is selected in the fourth frame, Ab5 is selected in the fifth frame, Vb6 and Ab6 are selected in the sixth frame, and Ab7 is selected in the seventh frame. Then, the individually selected data is sequentially and intermittently reproduced. By such the sequential reproduction, video data of the b-channel is reductively reproduced in every four frames, and audio data can be reproduced in all the frames. Hence, original sounds can be completely reproduced.

Furthermore, as shown in Fig. 3G, to reproduce the c-channel, Ac1 is selected in the first frame, Ac2 is selected in the second frame, Ac3 is selected in the third frame, Vc4 and Ac4 are selected in the fourth frame, Ac5 is selected in the fifth frame, Ac6 is selected in the sixth frame, and Ac7 is selected in the seventh frame. Then, the individually selected data is sequentially and intermittently reproduced. By such the sequential reproduction, video data of the c-channel is reductively reproduced in every four frames, and audio data can be played back in all the frames. Hence, original sounds can be completely reproduced.

As described above, the individual channel is reproduced intermittently with the same intermittent interval as that at recording, that is, the a-channel is reproduced in units of two frames, and the other channels such as the b-channel and the c-channel are reproduced in units of four channels. This enables the a-channel data to be presented more smoothly than the b- and c-channel data.

In this way, the arbitrarily change in the frame interval for recording video data on a specific channel enables the video data on the specific channel to be presented more smoothly.

With the configuration shown in Fig. 2, the frame interval is set to two frames for the a-channel, and the frame interval is set to four frames for the other b-channel and c-channel. However, a viewer/listener may arbitrarily set the frame intervals of the individual channels depending on the contents of video information.

The recording method as illustrated in Fig. 3 can be implemented in a configuration similar to the recording/reproducing apparatus of Embodiment 1 (See Fig. 2). However, a viewer/listener of user inputs information relating to a channel including video data which the viewer/listener desires to present more smoothly (such information is referred to as "priority channel information" hereinbelow) in the user-operation section 14, and a command is issued to the system controller 13.

The system controller 13 transfers the priority channel information to the record-channel determining circuit 15. According to the information received from the system controller 13, the record-channel determining circuit 15 outputs a gate signal in which a frame interval of the priority channel reduced shorter than a frame interval of the other channels. Others can be implemented in the same configuration as that shown in Fig. 11.

With the above-described configuration, the frame interval for recording the video data can be arbitrarily changed depending on the contents of video information, and the frame rate for a specific channel is thereby increased to enable the video data to be presented more smoothly.

The above-described frame interval is arbitrarily set by the viewer/listener depending on the contents of video information. However, in a configuration in which video data includes attribute information representing the contents of video data, the attribute information may be detected to determine the frame interval of each channel.

For example, video data transferred with a digital broadcast includes attribute data representing the contents of the broadcast program. The attribute includes, for example, data representing the type of broadcast programs (a news program, a music program, a movie program, and an animation program). The attribute information is built in video data on individual channels as a data flag. The apparatus may be programmed such that the attribute information is detected before the video data is recorded onto an optical disk, and then, for example, the movie program and the animation program are recorded at a half of the frame interval for the news program or the music program.

<EMBODIMENT 3>

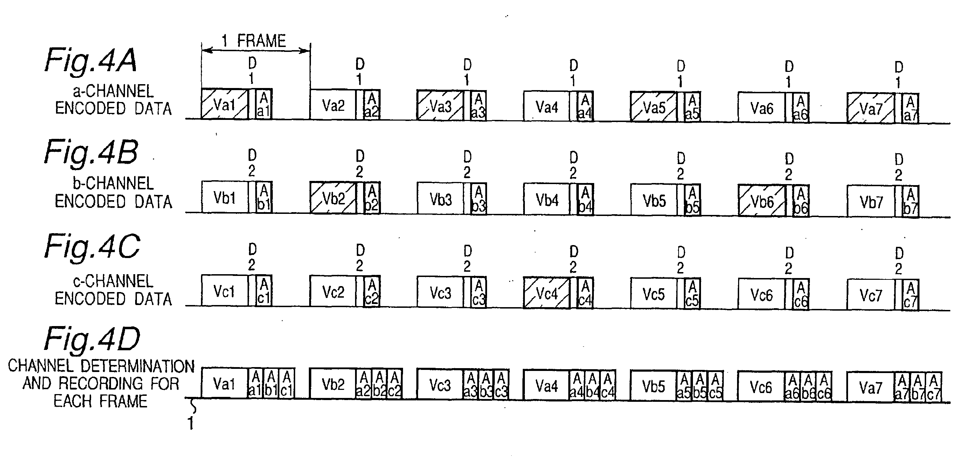

Figs. 4A and 4D show record formats, and are explanatory views of formats of video data including built-in attribute data. Attribute data D is arranged in a latter-half portion of video data Vxy of each channel. Fig. 4A shows attribute data D1 built in a latter-half portion of video data Vay of the a-channel. Fig. 3B shows attribute data D2 built in a latter-half portion of video data Vby of the b-channel. Fig. 4C shows attribute data D2 built in a latter-half portion of video data Vcy of the c-channel.

In the formats, the attribute data "D1" represents a movie program, and the attribute data "D2" represents a music program. Fig. 4D shows a state in which the attribute data D1 and D2 are detected, channels to be recorded are determined according to the detection result, and the frame intervals are set. For example, when the movie program having the attribute "D1" is detected, a 1/2 frame interval in comparison to a frame interval of the other attributes is set therefor to thereby enable smooth reproduction of the motion picture.

By using the attribute data as above, a viewer/listener need not to carry out a complicated procedure for determining the frame rate for each program. Only by initially determining the frame-interval arrangement, the frame interval can be set automatically.

A method of reproducing data in a record track for which the frame interval is determined using the attribute data is the same as that shown in Figs. 3E, 3F, and 3G. Hence, description of the method will be omitted.

When the recording is performed according to the above-described method, even though the frame rate is not manually set by the viewer/listener, the movie program can be automatically reproduced more smoothly than the music program.

In a case where the attribute data is not included in video data in a digital broadcast, the feature of a motion vector included in the video data can be extracted to presume the attribute thereof.

As above, referring to Figs. 3 and 4, description has been made regarding the case in which the video information on three channels is selected. As a matter of course, however, even in a case where arbitrary N channels are selected, regardless of the number of selected channels, recording can be implemented at the optical disk recording rate being maintained.

The recording method described with reference to Fig. 4 can be implemented using the recording/reproducing apparatus having the configuration shown in Fig. 11. In this case, an attribute-data detecting circuit 34 detects attribute data included in video data in a digital broadcast. Specifically, the attribute-data detecting circuit 34 separates attribute data from video and audio source data to detect the attribute, and inputs the attribute data to the record-channel determining circuit 15.

According to information received from the attribute-data detecting circuit 34, the record-channel determining circuit 15 outputs a gate signal representing data of a narrowed frame interval for a channel of which data needs to be reproduced more smoothly. For example, a short frame interval is set for a channel which is detected as a movie program, while a long frame interval is set for a channel which is detected as a music program.

<EMBODIMENT 4>

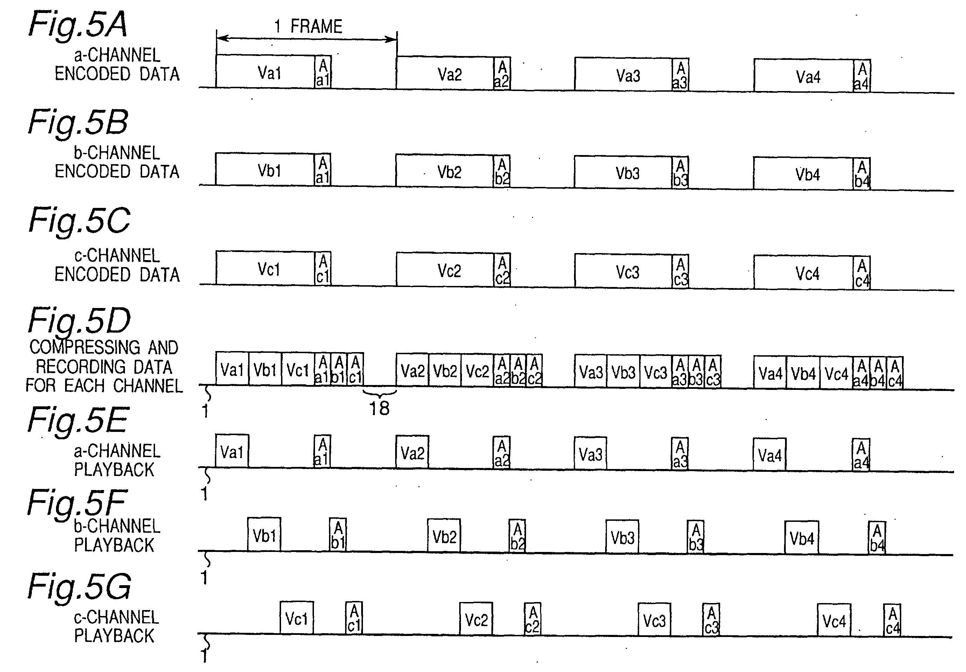

Figs. 5A to 5G are explanatory views showing an optical disk recording method and a data arrangement on an optical disk according to the present embodiment. These figures show a method of selecting video information on three-channel broadcast programs from broadcasted programs and recording the video information at a predetermined recording rate, and a method of reproducing the recorded information; and the figures shows record formats of the video information.

Fig. 5A shows a state where video information on a selected a-channel is encoded to digital-signal blocks arranged in units of frames. Figs. 5B and 5C show states where video information on respective b- and c-channels selected is encoded to digital-signal blocks arranged in units of frames.

Fig. 5D shows that, in order to record video data and audio data for three channels, video data and audio data for each channel are compressed in units of frame and arranged in one-frame time, so that the compressed data for three channels can be included within one-frame time on the track 1 of the optical disk.

For example, each of the video data Va1 to Va4 of the a-channel is compressed so as to be of 1/3 in data amount. Similarly, each of the video data Vb1 to Vb4 of the b-channel is compressed so as to be of 1/3 in data amount, and each of the video data Vc1 to Vc4 of the c-channel is compressed so as to be of 1/3 in data amount. Thus, the amounts of data are time-division multiplexed to be recordable within a one-frame time and thereby recorded into the track 1 of the optical disk.

In this way, the video data on each channel is compressed in data amount so as to be of 1/3 of the amount of encoded data. That is, the video data is compressed to be of 1/(number of channels) in data amount. Thereby, three-channel video data can be arranged in each frame.

More specifically, when the data amount of the video data per unit frame time that can be recorded onto the optical disk is M, the amount of selected-channel video data recorded within the unit frame time is substantially M/N.

In this way, by compressing the amount of video data in units of frames at a rate of 1/(number of channels), the video data can be recorded substantially at a constant recording rate, regardless of the number of the selected video channels.

The compression ratio for each channel is not limited to 1/(number of channels). The compression ratio can be set for each channel so that a total amount of N channels of compressed video data to be recorded in a record time T which is the minimum of time or period in which at least one video frame of each channel is included is less than or equal to a data amount that can be recorded in the time T at the maximum recording rate of the optical disk.

However, regarding the audio data synchronizing with the video data in units of frames in each channel, the audio data of all channels are recorded into each frame regardless of, for example, the number of selected video channels and the compression ratio of the video data. The reason for the above is that the audio data has less data amount in a frame than the amount of the video data and therefore the audio data on all the channels can easily be arranged in one frame.

In Figs. 5A to 5G, audio data synchronizing with the video data Va1 of the a-channel is Aa1, audio data synchronizing with the video data Vb1 of the b-channel is Ab1, and audio data synchronizing with the video data Vc1 of the c-channel is Ac1.

The audio data that is synchronous with the video data is arranged and recorded as shown in Fig. 5D. Specifically, the audio data is not compressed in any frames, and is recorded as in the data amount when decoded.

In Fig. 5D, gaps 18 which are unrecorded portions are arranged between the record-data frames. However, the data may be recorded continually without the gaps 18 provided.

In addition, one record frame may be recorded over different sector fields 7 of the optical disk 6 (See Fig. 12).

Next, a description will be made regarding a method of reproducing video and audio data those arranged and recorded onto the track 1 of the optical disk in a manner as shown in Fig. 5D.

As shown in Fig. 5E, when reproducing the a-channel, Va1 and Aa1 in the first frame, Va2 and Aa2 in the second frame, Va3 and Aa3 in the third frame, and Va4 and Aa4 in the fourth frame are selected respectively and reproduced sequentially and intermittently. After such the sequential reproduction, the video data is decompressed and then decoded. Since the audio data is not compressed at recording, it can be decoded without decompression.

As shown in Fig. 5F, when reproducing the b-channel, Vb1 and Ab1 in the first frame, Vb2 and Ab2 in the second frame, Vb3 and Ab3 in the third frame, and Vb4 and Ab4 in the fourth frame are selected respectively and reproduced sequentially and intermittently.

Similarly, as shown in Fig. 5G, when reproducing the c-channel, Vc1 and Ac1 in the first frame, Vc2 and Ac2 in the second frame, Vc3 and Ac3 in the third frame, and Vc4 and Ac4 in the fourth frame are selected respectively and reproduced sequentially and intermittently.

In this way, by compressing the amount of video data in units of frames at a rate of 1/(number of channels), the video data can be recorded substantially at a constant recording rate, regardless of the number of the selected video channels.

With a small number of channels selected for data recording, the compression ratio for the video data on each channel becomes relatively small. Hence, higher-quality image can be reproduced. Consequently, regardless of the number of the selected channels, the recording rate of the optical disk device can be efficiently used.

In the above, the case where video information on three channels has been selected has been described. However, even when arbitrary N channels are selected, the embodiment can be carried out similar to the above.

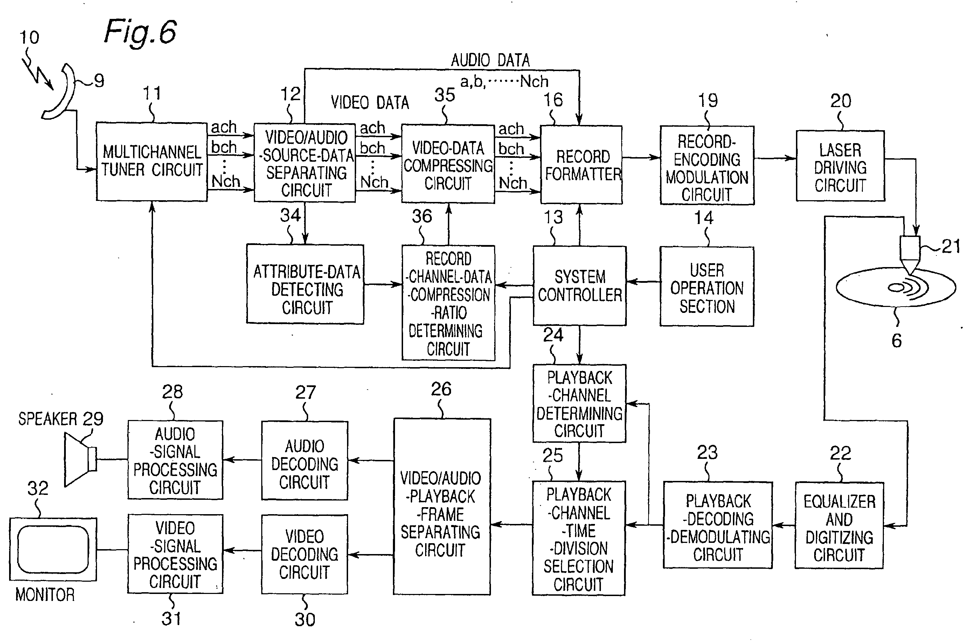

Fig. 6 shows a configuration of a recording/reproducing apparatus designed to record/reproduce the optical disk 6 by employing the recording method described referring to Fig. 5.

First, recording operation will be described referring to a configuration shown in Fig. 12.

The recording/reproducing apparatus receives a radio signal 10 relating to a plurality of programs of broadcast such as digital broadcast through an antenna 9. A viewer/listener selects a broadcast program desired to be recorded onto the optical disk from the received broadcast programs by using an operation section 14 and commands a system controller 13.

The system controller 13 transfers channel information in the broadcast program selected by the user to a multichannel tuner circuit 11. The multichannel tuner circuit 11 converts in frequency only a radio signal of the channel selected by the user to a base-band digital signal. The encoded video and audio data on the individual a-, b-, and c-channels in Figs. 5A, 5B, and 5C represent data arrays that have been output from the multichannel tuner circuit 11.

The video/audio-source-data separating circuit 12 separates video and audio data on the individual channels which have been output from the multichannel tuner circuit 11 into video data and audio data respectively in units of frames. The separated audio data on the multiple channels is input to the record formatter 16, and the video data is input to a video-data-amount compressing circuit 35.

Subsequently, the system controller 13 transfers information relating to data compression for each selected channel to a record-channel-compression-ratio determining circuit 36. In the cases shown in Figs. 5A to 5H, the data compression information is information for setting a uniform compression ratio for all channels. According to the information received from the system controller 13, the record-channel-compression-ratio determining circuit 36 determines data compression ratios $\alpha$ for each channels so that when recording is performed at a predetermined recording rate of the recording/reproducing apparatus, the total data amounts of video data on the individual selected channels can be recorded within a one-frame time.

The data compression ratios $\alpha$ thus determined are input to the video-data-amount compressing circuit 35, and video data is compressed so as to enable the total data amounts of the individual channels to be recorded within a one-frame time. Specifically, the video data is compressed so that data having data amount of (total data amount of compressed video data)/(recording rate of the optical disk) is recordable within a one-frame time. For example, when "N" represents the number of selected channels, the compression ratio $\alpha$ is obtained as expressed by $\alpha=(1/N)$.

Subsequently, as shown in Fig. 5D, a record formatter 16 couples the individual-channel video data compressed by the video-data-amount compressing circuit 35 and uncompressed all-channel audio data, and arranges the coupled data. Thereby, the record formatter 16 generates and outputs the coupled data as data arrays that are to be practically recorded onto the track 1 of the optical disk 6.

As described above, the data compression ratio for each selected channel is controlled such that the amount of data to be recorded at a predetermined recording rate specific to the optical disk can be recorded within a one-frame time. This allows data on an arbitrary number of video channels to be arranged onto the track 1 of the optical disk 6 as shown in Fig. 5D without increasing the recording rate of the optical disk.

Subsequently, a record-encoding modulation circuit 19 modulates binary data output from the record formatter 16 into a modulated code to be recorded onto the optical disk 6. The modulated signal is input to a laser driving circuit 20, and a laser optical source in an optical pickup 21 is modulated in pulse according to the modulated signal. Subsequently, the laser beam is reduced in the optical pickup 21 into fine spot light, and data to be recorded as shown in Fig. 5D is recorded onto the track 1 of the optical disk 6.

Hereinbelow, reproducing operation (playback operation) will be described with reference to Fig 6.

An equalizer and digitizing circuit 22 converts a signal reproduced with the optical pickup 21 from the track 1 of the optical disk 6 into a digital signal. Then, a playback-decoding-demodulating circuit 23 demodulates the digital signal into binary data. An output of the playback-decoding-demodulating circuit 23 is demodulated in the form of a data array as shown in Fig. 5D.

Using an operation section 14, a user selects a channel which the user want to reproduce from video channels recorded on the optical disk 6, and commands the system controller 13.

The system controller 13 transfers the video-channel information selectively specified by the user to a playback-channel determining circuit 24. According to the information received from the system controller 13, the playback-channel determining circuit 24 outputs a gate signal only for an interval of video and audio data on the determined playback channel. At this time, according to an output signal of the playback-decoding-demodulating circuit and predetermined information included at the top of a read out frame, the playback-channel determining circuit 24 is capable of determining whether the frame is to be played back. Then, the playback-channel-time-division selection circuit 25 is controlled according to the gate signal, and only a video channel signal which is desired to be reproduced is selected and output by the selection circuit 25.

Data arrays of video and audio data selected and output as described above are formed as shown in Figs. 5E, 5F, and 5G.

Subsequently, the video and audio data selected by the playback-channel-time-division selection circuit 25 is separated by a video/audio-playback-frame separating circuit 26 into audio data and video data. The audio data separated and output is decoded by an audio decoding circuit 27. The decoded data is converted into an audio signal through an audio-signal processing circuit 28 and the audio signal is output from a speaker 29. On the other hand, the video data is decoded, and the decoded data is reproduced by a video decoding circuit 30 on a monitor 32 through a video-signal processing circuit 31. At this time, the video data is decoded by the video decoding circuit 30 after decompressed according to the compression-ratio information included in the video data. However, the audio data is not decompressed since it has not been compressed.

<EMBODIMENT 5>

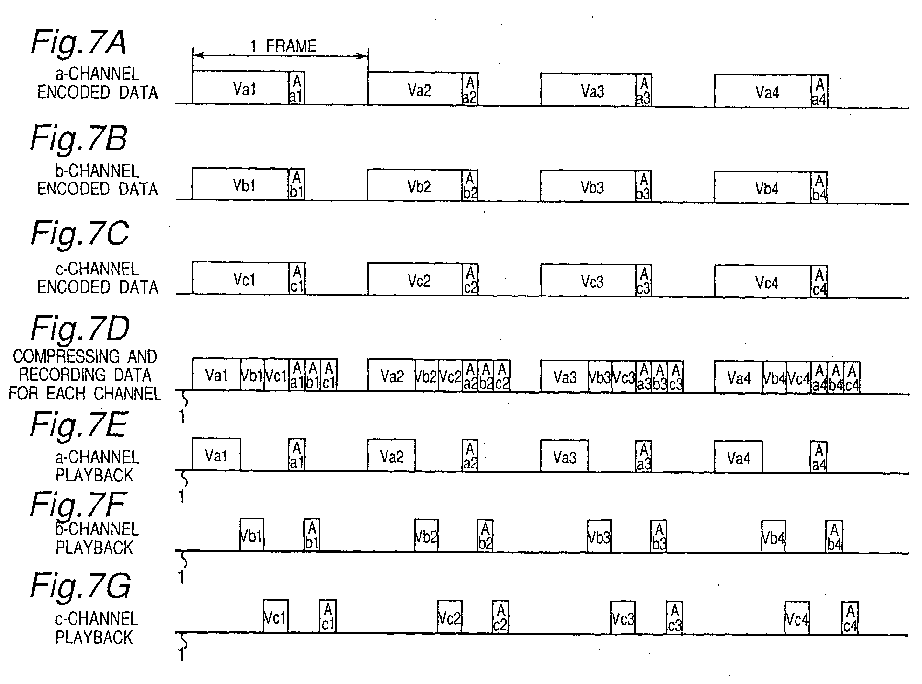

Fig. 7 is an explanatory view showing an optical disk recording method and optical disk record formats according to the present embodiment.

In the Embodiment 4, video information on three channels is selected, and the video data for each channel is compressed at the same compression rate, for recording. However, the data compression ratio may be changed depending on the channel when the video data for one channel is desired to be recorded or reproduced with a higher quality than other channels.

For example, when one channel with a movie program and two channels of music programs are selected and synchronously recorded, it is preferable that the movie program on one channel is reproduced with a higher quality than music programs on other two channels.

Assuming the case as above, Figs. 7A to 7G show that the a-channel is reproduced with a higher quality than b- and c-channels.

Fig. 7A shows a state where video information on the selected a-channel is encoded to digital-signal blocks arranged in units of frames. Figs. 7B and 7C each shows a state where video information on each of the other channels is encoded to data blocks arranged in units of screen frames.

Fig. 7D shows a state where video data on each channel is compressed in units of frames, and video data and audio data on three channels are arranged to be included within a one-frame time onto the track 1 of the optical disk.

In the example shown in Fig. 7D, in order to reproduce the video data of the a-channel with a higher quality than other channels, video data is recorded on track 1 of the optical disk by making the compression ratio for the video data on the a-channel lower than ratios for the video data on the other channels. For example, the data compression ratios are set so that the record data amount of the a-channel is twice the record data amount of the b- channel or the c-channel.

By changing the compression ratio depending on the channel as in the above-described example, video data of only the specific channel can be recorded on the optical disk with high quality.

Hereinbelow, a description will be given regarding a reproducing method for the video data and the audio data arranged and recorded onto the track 1 of the optical disk, as shown in Fig. 7D.

As shown in Fig. 7E, to reproduce the a-channel, Va1 and Aa1 in the first frame, Va2 and Aa2 in the second frame, Va3 and Aa3 in the third frame, and Va4 and Aa4 in the fourth frame are selected respectively and reproduced sequentially and intermittently. Then, the video data is decompressed and decoded. The audio data can be decoded without decompression since the audio data is not compressed at the recording step.

As in the playback for the a-channel, regarding reproduction of the b-channel, video data and audio data on only the b-channel are selected in units of frames and sequentially and intermittently reproduced (See Fig. 7F). However, the data amount of the b-channel is half of the data amount of the a-channel, and therefore the decoded played-back image quality of the b-channel is lower than that of the a-channel.

As in the playback for the b-channel, regarding reproduction of the c-channel, video data and audio data on only the c-channel are selected in units of frames and sequentially and intermittently reproduced (See Fig. 7G). However, the data amount of the c-channel is half of the data amount of the a-channel, and therefore the decoded played-back image quality of the c-channel is lower than that of the a-channel.

As described above, since the a-channel has the data amount twice as much as the data amount of the other b- or c-channel, the a-channel can be reproduced with a higher video quality.

In this way, by arbitrarily changing the record data amount depending on the contents of video information on only a specific video channel, the specific channel can be reproduced with a higher video quality.

While the data amount of the a-channel is set twice as much as that of other channels in the example shown in Figs. 7A to 7G, a viewer/listener may set an arbitrary record data amount or compression ratio for each video channel depending on the contents of the video information.

The recording method described referring to Figs. 7A to 7G can be implemented with a recording/reproducing apparatus having the configuration shown in Fig. 6. In this case, a viewer/listener uses a user operation section 37 to input information (priority channel information) relating to a video channel for which higher quality reproduction is desired and to command the system controller 13.

The system controller 13 transfers the priority channel information to the record-channel-compression-ratio determining circuit 36. According to the information received from the system controller 13, the record-channel-compression-ratio determining circuit 36 controls the video-data-amount compressing circuit 35 so that the compression ratio of video data on the priority channel is determined with priority to the other channels to produce the priority channel with a higher video quality. Other operations are similar to those already described above.

In the configuration as described above, the compression ratio of video data can be arbitrarily changed depending on the contents of video data, and a specific channel can be reproduced with a higher video quality.

<EMBODIMENT 6>

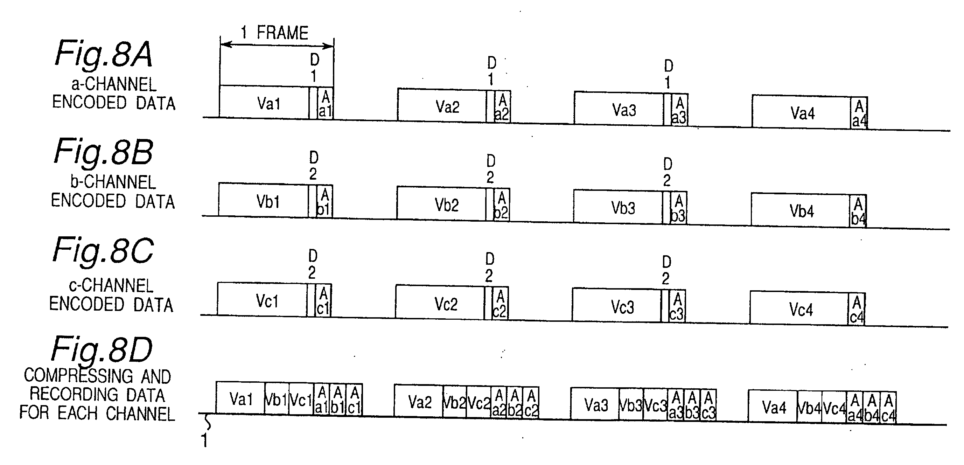

Figs. 8A and 8D are explanatory views showing an optical disk recording method and formats of an optical disk according to the present embodiment. In this case, attribute data is included in a latter-half portion of video data Vxy of each channel. Fig. 8A shows attribute data D1 built in a latter-half portion of video data Vay of the a-channel. Fig. 8B shows attribute data D2 built in a latter-half portion of video data Vby of the b-channel. Fig. 8C shows attribute data D2 built in a latter-half portion of video data Vcy of the c-channel.

In Figs. 8A to 8D, the attribute data "D1" represents a movie program, and the attribute data "D2" represents a music program. The attribute data is detected, and record data amount or compression ratio for each channel are set automatically (See Fig. 8D). For example, when a movie program having the attribute "D1" is detected according to the attribute data, the record data amount of the a-channel is set twice as much as that of the other attribute, resulting in reproduction of a smoother motion picture.

By using the attribute data as above, a viewer/listener need not to carry out a complicated procedure for allocation of the data amount to each program. Once the allocation of the record data amount depending on the contents of video information is initially determined, the frame interval can be set automatically thereafter.

A method of reproducing data on a record track for which the frame interval is determined based on the attribute data is the same as that shown in Figs. 7E, 7F, and 7G. Hence, description of the method will be omitted.

According to the above described method, even when the record data amount is not manually set by the viewer/listener, it is possible to record or reproduce automatically a movie program more smoothly than a music program.

In a case where the attribute data is not included in video data in a digital broadcast, the attribute can be presumed by extracting a feature of a motion vector included in the video data.

As above, referring to Figs. 7A to 7G and 8A to 8D, description has been made regarding the case in which the video information on three channels is selected. As a matter of course, however, even in a case where arbitrary N channels are selected, regardless of the number of selected channels, recording can be implemented at the constant recording rate of the optical disk.

The recording method described with reference to Figs. 8A to 8D can be implemented using a recording/reproducing apparatus having the configuration shown in Fig. 6. In this case, however, the attribute-data detecting circuit 34 detects attribute data included in a digital broadcast. Specifically, the attribute-data detecting circuit 34 separates and detects attribute data from video and audio source data to input the attribute data to the record-channel-compression-ratio determining circuit 36.

The record-channel-compression-ratio determining circuit 36 determines the priority in the compression ratio for each channel according to information received from the attribute-data detecting circuit 34. For example, a low data compression ratio is determined for a channel detected as a movie program, while a high data compression ratio is determined for a channel detected as a music program. Other configuration is similar to that shown in Fig. 12.

According to the configuration described above, the viewer/listener need not intentionally determine the video quality, the movie program can be automatically reproduced with a higher quality than the music program.

<EMBODIMENT 7>

An optical disk recording apparatus of the present embodiment records data by determining amount of data to be recorded for each channel in units of frames such that the total amount of data to be recorded until broadcast programs in selected plurality of channels end is less than or equal to a remaining data capacity (data capacity of free area ) of the optical disk in which data can be recorded.

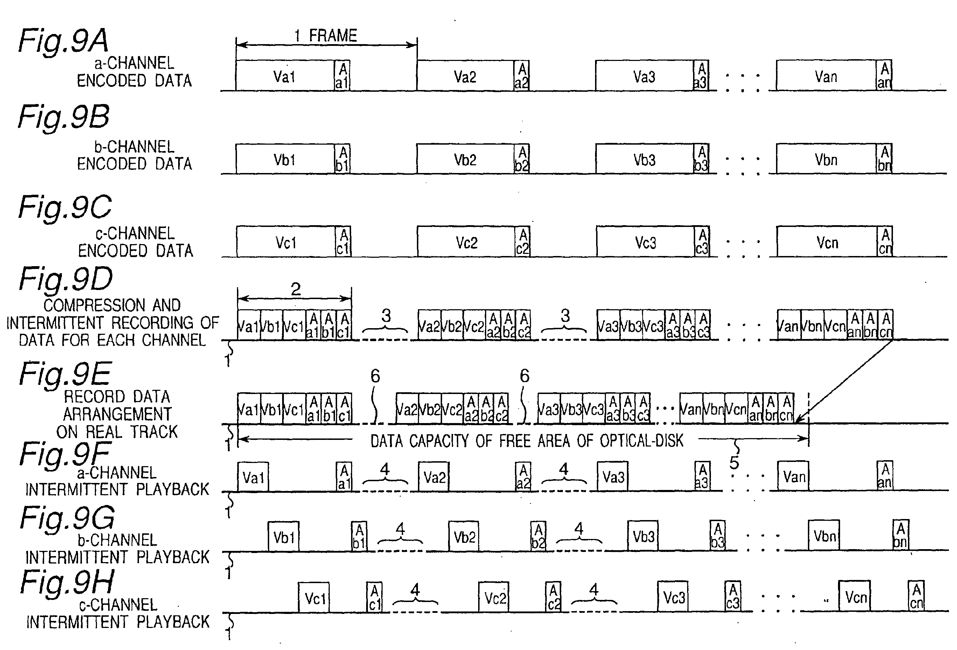

Referring to Figs. 9A to 9H, operation of the optical disk recording/reproducing apparatus of the present embodiment will be described. The figures show the case that three channels, namely, a-, b- and c-channels are selected as channels to be recorded, and that programs broadcasted on each channel in a predetermined time band is recorded (same as Embodiment 8). In addition, the recording/reproducing apparatus of the present embodiment has the configuration shown in Fig. 6.

Fig. 9A shows a state where video information on a selected a-channel is encoded to digital-signal blocks arranged in units of frames. Figs. 9B and 9C show states where video information on respective b- and c-channels selected is encoded to digital-signal blocks arranged in units of frames.

In the recording/reproducing apparatus, before recording the video information, the system controller 13 detects a free area (remaining capacity) of the optical disk onto which data is to be stored. The remaining capacity can be known from a track address. In addition, the system controller 13 computes the total amounts of the encoded video data and audio data on three channels (See Figs. 9A, 9B, and 9C) in a period up to the ends of the broadcast programs (from start of recording to end of recording). The record-channel-compression-ratio determining circuit 36 sets, according to the data amounts, a data compression ratio β for recording the video data on each channel to cause the total data amounts of the three channels to be less than or equal to the remaining capacity of the optical disk. For example, the data compression ratio β is obtained as follows;

$$\beta = (1/N) \cdot (Dr/R)/Tf$$

where "N" represents the number of channels, "Tf" represents the time from start of the broadcast program to end of the broadcast program, "Dr" represents the remaining data capacity of the optical disk, and "R" represents the recording rate of the optical disk recording/reproducing apparatus. Since the audio-data amount is substantially and sufficiently smaller than the video-data amount, even when audio data of N channels is recorded, the compression ratio β can be obtained using the above expression.

The system controller 13 compares a period required from the start of broadcast-program to the end of broadcast-program (the time hereinbelow will be referred to as a "data record time") and a time for which data can be recorded onto the optical disk (the time hereinbelow will be referred to as a "recordable time"). The recordable time of the optical disk is obtained by (remaining data capacity of the optical disk)/(recording rate of the optical disk).

If the data record time is less than or equal to the recordable time of the optical disk, according to the method described in Embodiment 4, the encoded data on the three channels is compressed at a compression ratio α, and then recorded within the one-frame time.

If the data record time is longer than the recordable time of the optical disk, the data is compressed in units of frames at the compression ratio β, and is then recorded. However, if video data and audio data that have been compressed in units of frames at the compression ratio β are recorded continuously in real time at the recording rate of the optical disk, all the data for a period up to the end of broadcast-program cannot be recorded. For this reason, in the above case, intermittent recording is performed as shown in Fig. 9D.

As shown in Fig. 9D, a record data time length 2 for one frame when compression is performed so that a total amount of data to be recorded is less than or equal to the remaining data capacity of the optical disk becomes shorter than a time length of one frame when recording operation is performed continuously in real time. Therefore, as shown in Fig. 9D, it needs intermittent recording with gaps 3 for temporarily halting the record operation to perform physically efficient recording for the data onto a recording area of the optical disk at a predetermined recording rate of the recording/reproducing apparatus.

Fig. 9E shows a record-data array on the real track 1 in a state after the intermittent recording has thus been performed. The time length for recording one frame data is shorter than one frame of time length on real time at a predetermined recording rate of the recording/reproducing apparatus. When excluding gaps 6 between record areas, the data is recorded without gaps on the track 1 of the optical disk and thereby a high recording efficiency in physical format is achieved.

When continuous reproduction is performed at a predetermined reproduction rate of the recording/reproducing apparatus, the reproduction is performed with data timing as shown in Fig. 9E.

The total amount of video data Va1 to Van and audio data Aa1 to Aan for a period up to the broadcast-program end time is maintained less than or equal to a remaining data capacity 5 of the optical disk.

In this way, the data compression ratio is determined by the following such that the total amount of data to be recorded is less than or equal to the remaining data capacity of the optical disk. Then, the data is recorded intermittently using the data compression ratio thus determined. Thus, regardless of the remaining data capacity of the optical disk, it can complete to record programs of selected arbitrary video channels in a period up to the end of the broadcast program at a predetermined recording rate of the recording/reproducing apparatus.

A description will be made regarding a reproducing method for video data and audio data that are arranged and recorded onto the track 1 of the optical disk, as shown in Fig. 9E.

As shown in Fig. 9F, to reproduce the a-channel, Va1 and Aa1 are first reproduced. Before the subsequent Va2 and Aa2 are played back, period 4 serving to temporarily halt the reproduction operation is provided. Similarly, the period 4 is provided between (Va2 and AA2) and (Va3 and Aa3).

In order to reproduce data thus intermittently recorded onto the track (See Fig. 9E), the data is intermittently reproduced similar to the case of recording. Thereby, the compressed recorded data can be reproduced in real time in units of video/audio frames.

Similarly, regarding the b-channel and the c-channel, period 4 serving to temporarily halt the reproduction operation is provided, and intermittent reproduction is performed, as shown in Figs. 9G and 9H. Thereby, the compressed recorded data can be reproduced in real time in units of video/audio frames.

As described above, even at a fixed reproduction rate of the recording/reproducing apparatus, the intermittent reproduction is performed to reproduce the track onto which the data is intermittently recorded by setting the data compression ratio to cause the total amount of data to be recorded to be less than or equal to the remaining data capacity of the optical disk. According to this arrangement, broadcast programs of the data-recorded channels can securely be recorded in a period up to the end of the broadcast program.

As a matter of course, the intervals for temporarily halting the recording operation and the reproducing operation, i.e., the intervals in the intermittent recording and the intermittent reproduction need not be set in units of frames of video/audio data. The intervals may be arbitrarily set depending on the capacity of data buffer memory of the recording/reproducing apparatus.

Moreover, the data compression ratios for the individual channels need not be identical. The data compression ratios may be arbitrarily set according to the methods shown in Figs. 7 and 8 as long as the total amount of data to be recorded in a period up to the end of the broadcast program is less than or equal to the remaining data capacity of the optical disk.

Referring to Fig. 9, description has been made with reference to the example in which either the start time or the end time of the broadcast programs of the channels is the same. In addition, the number of the audio-data frames thereof is also the same in the example.

However, the start time and the end time need not be identical for the individual broadcast programs, and may be arbitrarily set.

<EMBODIMENT 8>

In this embodiment, in case that broadcast programs of a plurality of channels are multiplexed and recorded by thinning out frames according to the method disclosed in Embodiment 1, the optical disk remaining data capacity is also considered to cause the recording to be completed regardless of the optical disk remaining data capacity.

More specifically, in the present embodiment, a total amount of data on selected plurality of channels for a period from the start of recording to the end of recording is compared with an optical disk remaining data capacity in which further data can be recorded. Then, the number of frames of video data on the individual channels is regulated so that a total amount of data on selected plurality of channels for a period from the start of recording to the end of recording is less than or equal to the optical disk remaining data capacity.

Figs. 10A to 10G are explanatory views showing an optical disk recording method and optical disk record formats according to the present embodiment. The optical disk recording/reproducing apparatus of the present embodiment has the configuration shown in Fig. 2.

Fig. 10A shows a state where video information on a selected a-channel is encoded to digital-signal blocks arranged in units of frames. Similarly, Figs. 10B and 10C show states where video information on respective b- and c-channels selected is encoded to digital-signal blocks arranged in units of one screen frame.

The recording/reproducing apparatus of the present embodiment determines the number of frames to be recorded in a recording operation so that the total amount of data relating to video and audio data on the channels to be recorded for a period up to the end of program is less than or equal to a detected optical disk remaining data capacity.

For that purpose, in the recording/reproducing apparatus, before recording the video information, the system controller 13 computes a total amount of the encoded video data and audio data on three channels (Figs. 10A, 10B, and 10C) in a period up to the end of program. Concurrently, the system controller 13 detects the remaining data capacity of the optical disk to be recorded. Then, the system controller 13 compares a time up to the end of recording with a remaining recordable time of the optical disk.

When the time up to the end of program is shorter than or equal to the optical disk remaining time, the encoded data in one frame of the selected channel is continually recorded at a recording rate of the recording/reproducing apparatus within the one-frame time according to the method described in Embodiment 1.

When the time up to the end of program is longer than the optical disk remaining time, the total number of recordable frames in the optical disk becomes smaller than the number of the encoded frames shown in Figs. 10A, 10B, and 10C. Accordingly, it needs to thin out and record the encoded frames so that the total number of data frames to be recorded is smaller than or equal to the total number of recordable frames.

Fig. 10D shows an example case where the video data in the a-channel is thinned out and recorded on every six frames, that is, Va4, Va10, Va16, ... are thinned out (or reduced). In this case, the audio data is not reduced. In the example shown in Fig. 10D, the a-channel is recorded at every six frames, and the data in each of the b-channel and the c-channel is recorded at every three frames.

When continuous reproduction is simply attempted in real time at a recording rate of the recording/reproducing apparatus for video data and audio data that have been compressed in units of frames, all data in a period up to the end of program can not be recorded. Concretely, the total number of frames of video-data that can be recorded in a period up to the end of the program becomes smaller than the number of the encoded frames shown in Figs. 10A, 10B, and 10C. Accordingly, as shown in Fig. 10D, it needs intermittent recording with periods 3 for temporarily halting the recording operation to record the data within the remaining recording area of the optical disk without changing the recording rate of the recording/reproducing apparatus.

Fig. 10E shows a record data array on the real track 1 in a state after the intermittent recording has thus been performed. In this case, regarding the portions corresponding to reduced video frames (Va4, Va10, ...), excluding gaps 6 between recording areas, the data is recorded on the track 1 of the optical disk frames without gaps, thereby resulting in a high physical format efficiency.

When data is reproduced continuously at a predetermined reproduction rate of the recording/reproducing apparatus, the reproduction is performed with data timing as shown in Fig. 10E.

In the case shown in the figure, the total amount of video data and audio data to which the channel determination and the frame reduction in the individual frames in a period up to the end of the program are applied is maintained less than or equal to a remaining data capacity 5 of the optical disk.

In this way, an arrangement is made such that intermittent recording is performed by setting the numbers of frames of the individual channels so as to cause the total amount of record data to be less than or equal to the remaining data capacity of the optical disk. According to this arrangement, broadcast programs of the video channels to be recorded can securely be recorded in a period up to the end of the broadcast programs, regardless of a fixed recording rate of the recording/reproducing apparatus or a remaining data capacity of the optical disk.

Hereinbelow, a description will be made regarding a reproduction method for video data and audio data that are arranged and recorded onto the track 1 of the optical disk, as shown in Fig. 10E.

As shown in Fig. 10F, in order to reproduce the a-channel, Va1, Aa1, Aa2, and Aa3 are reproduced sequentially. Before Aa4 is reproduced, period 4 serving to temporarily halt the reproduction operation is provided. When reproducing data thus intermittently recorded onto the track (Fig. 10E), areas relating to reduced frames are intermittently reproduced as in the case of recording. Thereby, video and audio can be reproduced on real time.

Similarly to the a-channel, regarding the b-channel and the c-channel, intermittent reproduction is performed, where period 4 serving to temporarily halt the reproduction operation is individually provided, as shown in Figs. 10G and 10H. Thereby, the compressed record data can be reproduced on real time in units of frames relating to video/audio data.

As described above, even at a fixed reproducing rate, intermittent reproduction is performed to reproduce the track for which intermittent recording has been performed by determining the numbers of frames of the individual channels so that the total amount of record data is less than or equal to the remaining data capacity of the optical disk.

It is noted that the interval for temporarily halting the record operation and the reproduction operation, i.e., the interval of the intermittent recording or the intermittent reproduction, may be arbitrarily set depending on the capacity of data buffer memory of the recording/reproducing apparatus.

The video data on the a-channel is thinned out in the example shown Figs. 10A to 10H. However, video data on arbitrary channels may be thinned out depending on the smoothness of a reproduced motion picture, as far as a total amount of data required to be recorded in a period up to the end of the broadcast-program is less than or equal to the remaining data capacity of the optical disk. Alternatively, data may be thinned out uniformly for individual channels. For example, when a time of a broadcast program to be recorded is 100 minutes and the optical disk remaining data capacity has a space for recording data for 40 minutes, the time differential is 60 minutes. In this case, the number of frames may be reduced to result in 20-minute reduction in each channel.

Furthermore, referring to Fig. 9, description has been made with reference to the example in which either the start time or the end time of the broadcast program of each channel is the same, and the number of the audio-data frames thereof is also the same. However, it is clear that the start time, the end time and the number of frames need not be identical for the individual broadcast programs, and they may be arbitrarily set.

The present invention has been described with reference to the specific embodiments. However, many other modifications, corrections and applications will be apparent to those skilled in the art. The present invention should not therefore be limited to the specific embodiments disclosed herein, and it could be limited only by the scope of the appended claims.

**Claims**

1. A method of recording video data on N (N is an integer) channels synchronously onto an optical disk, the video data formed of a time series of video frames, comprising:

   determining a compression ratio for each channel so that a total data amount for the N channels of video data after compression that is recorded during a record time T is less than or equal to a data amount that can be recorded at a maximum recording rate of the optical disk during the record time T, the record time T being a minimum time of record times individually comprising at least one video frame for each channel;
   compressing the video data in units of frames in each channel at the determined compression ratio; and
   recording the compressed data onto the optical disk,
   whereby the video data is recorded onto the optical disk so that a total amount of data on the N channels to be recorded in a unit time is substantially constant regardless of the number of channels to be recorded.

2. The method according to claim 1, wherein the compression ratio for the video data on each channel is set to 1/N.

3. The method according to claim 1, further comprising determining an allocation ratio of the data amount to be recorded for each channel in the record time T to all data to be recorded in the record time T according to contents of the video data on each channel,
   wherein the compression ratio for each channel is determined according to the determined allocation ratio.

4. The method according to claim 3, wherein, when the video data to be recorded includes attribute data indicating the contents of the video data, the attribute data is detected from the video data, and the contents of the video data on each channel is determined according to the detected attribute data.

5. The method according to claim 1, wherein, when the video data on each channel is accompanied by audio data synchronizing therewith,
   the determining determines the compression ratio for the video data on each channel so that a total data amount for N channels of video and audio data after compression that is recorded during the record time T is substantially constant regardless of the input number of channels, and
   the method comprises arranging the video compressed at the determined compression ratio and audio data into each frame in a predetermined order, to thereby record the data onto the optical disk.

6. The method according to claim 1, wherein, when the individual video data on the N channels (N is an integer) in the predetermined record time is to be synchronously recorded onto the optical disk,
   the method further comprises computing a total data amount of video data on the N channels to be recorded in the predetermined record time, and a capacity of free area of the optical disk in which data can be recorded,
   whereby the compression ratio is determined so that the total amount of data to be recorded is less than or equal to the capacity of free area of the optical disk in which data can be recorded.

7. A method of recording video data of N (N is an integer) channels synchronously onto an optical disk, the video data formed of a time series of video frames, comprising:

   selecting one of the N'channels in units of video frames, as a channel of which video data is recorded; and
   recording the video data in the video frame on the selected channel onto the optical disk,
   whereby N channels of the video data are time-division multiplexed in units of video frames and recorded onto the optical disk.

8. The method according to claim 7, wherein each channel is selected at every N frames as a channel of which video data is recorded.

9. The method according to claim 7, wherein an allocation ratio of the number of frames for each channel to be recorded in a predetermined time is determined according to the contents of the video data on each channel.

10. The method according to claim 9, wherein, when the input video data comprises attribute data indicating the contents of the video data, the method comprises detecting the attribute data from the video data, and determining the contents of the video data on each channel according to the detected attribute data.

11. The method according to claim 7, wherein, when the input video data on each channel is accompanied by audio data synchronizing therewith, the audio data on N channels accompanying the video data on the one channel is recorded in units of video frames.

12. The method according to claim 7, wherein, when each of the video data on the N channels (N is an integer) in a predetermined record time is to be synchronously recorded onto the optical disk, the method comprises:

computing a total data amount for the N channels of video data to be recorded in the predetermined record time, and a capacity of free area of the optical disk in which data can be recorded;
comparing the total data amount to be recorded with the capacity of free area of the optical disk; and
determining, when the total data amount to be recorded is greater than the capacity amount of the optical disk, the number of the video frames to be recorded in a predetermined time so that in at least one of the N channels the total data amount to be recorded is less than or equal to the capacity of free are of the optical disk.

13. A method of reproducing recorded data from an optical disk onto which N channels (N is an integer) of video data are compressed at a predetermined compression ratio and arranged in a predetermined channel order to thereby be recorded, comprising:

inputting information for designating a channel to be reproduced;
reading data from the optical disk in units of frames;
reproducing video data on the designated channel to be reproduced from the video data recorded in the read frame, after the video data is decompressed; and
reproducing audio data that is included in the read frame and is on the channel to be recorded.

14. A method of reproducing recorded data from an optical disk having an area in which video data on N channels (N is an integer) is recorded in units of frames by a time-division multiplexing method, the optical disk storing the video data selected in every predetermined number of frames on one channel, and audio data on all channels continuous to the video data, the method comprising:

inputting information for designating a channel to be reproduced;
reading data from the optical disk in units of frames; and
if video data included in the read frame is video data of designated channel to be reproduced, then reproducing the video data, and further reproducing audio data that is included in the read frame and is on the designated channel to be recorded.

15. An optical disk having an area in which video data on N channels (N is an integer) are recorded in units of frames by a time-division multiplexing method, the disk comprising,

a frame area which is provided corresponding to a video frame series in one channel and in which video data on each channel is multiplexed and recorded in units of video frames,
the frame area having a data length equal to a total for N channels of data length in one frame of video data which is compressed at a predetermined compression ratio; and
wherein the predetermined compression ratio is determined so that a total data amount for the N channels of video data to be recorded during a record time T is less than or equal to a data amount that can be recorded during the record time T at a maximum recording rate of the optical disk, the record time T being a minimum time in record times individually including at least one video frame for each channel.

16. The optical disk according to claim 15, wherein the predetermined compression ratio is set to 1/N.

17. The optical disk according to claim 15, wherein an allocation ratio of the data amount in the frame area for each channel is determined according to the contents of the video data.

18. The optical disk according to claim 17, wherein, when the video data includes attribute data indicating the contents of the video data, the attribute data is detected from the video data, and the contents of the video data on each channel are determined according to the detected attribute data.

19. The optical disk according to claim 15, wherein, when the input video data on each channel is accompanied by audio data synchronizing therewith, the audio data on the N channels accompanying the video data on the one channel is recorded in units of video frames.

20. An optical disk having an area in which video data of N (N is an integer) channels are recorded synchronously onto an optical disk, the video data formed of a time series of video frames, wherein

one of the N channels is selected as a channel of which video data is to be recorded, in units of video frames, and

an area for recording the video data in the video frame on the selected channel onto the optical disk is arranged on a track of the optical disk.

21. The optical disk according to claim 20, wherein a video frame arranged at a (mN+C)th position on the track is arranged on the track of the optical disk as a recording area for a c-th channel of the N channels, where "m" is an integer that is 0 or larger, and "C" is an integer that is "1" or larger and is "N" or smaller.

22. The optical disk according to claim 20, wherein the one channel is selected according to the contents of the video data.

23. The optical disk according to claim 22, wherein, when the video data includes attribute data indicating the contents of the video data, the attribute data is detected from the video data, and the contents of the video data on each channel are determined according to the detected attribute data.

24. The optical disk according to claim 20, wherein, when the input video data on each channel is accompanied by audio data synchronizing therewith, the audio data on the N channels accompanying the video data on the one channel is recorded in units of video frames.

25. An apparatus for recording video data on N (N is an integer) channels synchronously onto an optical disk, the video data formed of a time series of video frames, comprising:

a section that determines a compression ratio for each channel so that a total data amount for the N channels of video data after compression that is recorded during a record time T is less than or equal to a data amount that can be recorded at a maximum recording rate of the optical disk during the record time T, the record time T being a minimum time of record times individually comprising at least one video frame for each channel;

a section that compresses the video data in units of frames in each channel at the determined compression ratio; and

a section that records the compressed data onto the optical disk,

whereby the video data is recorded onto the optical disk so that a total amount of data on the N channels to be recorded in a unit time is substantially constant regardless of the number of channels to be recorded.

26. The apparatus according to claim 25, wherein the compression ratio for the video data on each channel is set to 1/N.

27. The apparatus according to claim 25, further comprising a section that determines an allocation ratio of the data amount to be recorded for each channel in a predetermined time to all data to be recorded in the predetermined time according to contents of the video data on each channel,

whereby the compression ratio for each channel is determined according to the determined allocation ratio.

28. The apparatus according to claim 26, wherein, when the video data to be recorded includes attribute data indicating the contents of the video data, the attribute data is detected from the video data, and the contents of the video data on each channel is determined according to the detected attribute data.

29. The apparatus according to claim 25, wherein, when the video data on each channel is accompanied by audio data synchronizing therewith,

the section for determining determines the compression ratio for the video data on each channel so that a total data amount for N channels of video and audio data after compression that is recorded during the record time T is substantially constant regardless of the input number of channels, and

the apparatus comprises a section that arranges the video and audio data compressed at the determined compression ratio into each frame in a predetermined order, to thereby record the data onto the optical disk.

30. The apparatus according to claim 25, wherein, when the individual video data on the N channels (N is an integer) in the predetermined record time is to be synchronously recorded onto the optical disk,

the apparatus further comprises a section that computes a total data amount of video data on the N channels to be recorded in the predetermined record time, and a capacity of free area of the optical disk in which data can be recorded,

whereby the compression ratio is determined so that the total amount of data to be recorded is less than or equal to the capacity of free area of the optical disk in which data can be recorded.

31. An apparatus for recording video data of N (N is an integer) channels synchronously onto an optical disk, the video data formed of a time series of video frames, comprising:

a section that selects one of the N channels in units of video frames, as a channel of which video data is recorded; and
a section that records the video data in the video frame on the selected channel onto the optical disk,
whereby N channels of the video data are time-division multiplexed in units of video frames and recorded onto the optical disk.

32. The apparatus according to claim 31, wherein each channel is selected at every N frames as a channel of which video data is recorded.

33. The apparatus according to claim 31, wherein an allocation ratio of the number of frames for each channel to be recorded in a predetermined time is determined according to the contents of the video data on each channel.

34. The apparatus according to claim 33, wherein, when the input video data comprises attribute data indicating the contents of the video data, the attribute data is detected from the video data, and the contents of the video data on each channel is determined according to the detected attribute data.

35. The apparatus according to claim 31, wherein, when the input video data on each channel is accompanied by audio data synchronizing therewith, the audio data on N channels accompanying the video data on the one channel is recorded in units of video frames.

36. The apparatus according to claim 31, wherein, in order to record synchronously each of the video data on the N channels (N is an integer) in a predetermined record time onto the optical disk, the apparatus comprises:

a section that computes a total data amount for the N channels of video data to be recorded in the predetermined record time, and a capacity of free area of the optical disk in which data can be recorded;
a section that compares the total data amount to be recorded with the capacity of free area of the optical disk; and
a section that determines, when the total data amount to be recorded is greater than the capacity amount of the optical disk, the number of the video frames to be recorded in a predetermined time so that in at least one of the N channels the total data amount to be recorded is less than or equal to the capacity of free are of the optical disk.

37. An apparatus for reproducing recorded data from an optical disk onto which N channels (N is an integer) of video data are compressed at a predetermined compression ratio and arranged in a predetermined channel order to thereby be recorded, comprising:

a section that inputs information for designating a channel to be reproduced;
a section that reads data from the optical disk in units of frames; and
a section that reproduces video data on the designated channel to be reproduced from the video data recorded in the read frame, after the video data is decompressed, and audio data that is included in the read frame and is on the channel to be recorded.

38. An apparatus for reproducing recorded data from an optical disk having an area in which video data on N channels (N is an integer) is recorded in units of frames by a time-division multiplexing method,
the optical disk storing the video data selected in every predetermined number of frames on one channel, and audio data on all channels continuous to the video data,
the apparatus comprising:

a section that inputs information for designating a channel to be reproduced;
a section that reads data from the optical disk in units of frames; and
a section that, if video data included in the read frame is video data of designated channel to be reproduced, then reproduces the video data, and audio data that is included in the read frame and is on the designated channel to be recorded.

Fig.1A a-CHANNEL ENCODED DATA

Fig.1B b-CHANNEL ENCODED DATA

Fig.1C c-CHANNEL ENCODED DATA

Fig.1D CHANNEL DETERMINATION AND RECORDING FOR EACH FRAME

Fig.1E a-CHANNEL PLAYBACK

Fig.1F b-CHANNEL PLAYBACK

Fig.1G c-CHANNEL PLAYBACK

EP 1 206 137 A1

Fig.2

EP 1 206 137 A1

Fig.3A

a-CHANNEL
ENCODED DATA

1 FRAME

| Va1 | A a1 | | Va2 | A a2 | | Va3 | A a3 | | Va4 | A a4 | | Va5 | A a5 | | Va6 | A a6 | | Va7 | A a7 |

Fig.3B

b-CHANNEL
ENCODED DATA

| Vb1 | A b1 | | Vb2 | A b2 | | Vb3 | A b3 | | Vb4 | A b4 | | Vb5 | A b5 | | Vb6 | A b6 | | Vb7 | A b7 |

Fig.3C

c-CHANNEL
ENCODED DATA

| Vc1 | A c1 | | Vc2 | A c2 | | Vc3 | A c3 | | Vc4 | A c4 | | Vc5 | A c5 | | Vc6 | A c6 | | Vc7 | A c7 |

Fig.3D

CHANNEL DETERMINATION
AND RECORDING FOR
EACH FRAME

| Va1 | A a1 b1 c1 | Vb2 | A a2 b2 c2 | Vc3 | A a3 b3 c3 | Va4 | A a4 b4 c4 | Vb5 | A a5 b5 c5 | Vc6 | A a6 b6 c6 | Va7 | A a7 b7 c7 |

Fig.3E

a-CHANNEL
PLAYBACK

| Va1 | A a1 | | A a2 | Va3 | A a3 | | A a4 | Va5 | A a5 | | A a6 | Va7 | A a7 |

Fig.3F

b-CHANNEL
PLAYBACK

| A b1 | Vb2 | A b2 | | A b3 | | A b4 | | A b5 | Vb6 | A b6 | | A b7 |

Fig.3G

c-CHANNEL
PLAYBACK

| A c1 | | A c2 | | A c3 | Vc4 | A c4 | | A c5 | | A c6 | | A c7 |

**Fig.4A** a-CHANNEL ENCODED DATA

**Fig.4B** b-CHANNEL ENCODED DATA

**Fig.4C** c-CHANNEL ENCODED DATA

**Fig.4D** CHANNEL DETERMINATION AND RECORDING FOR EACH FRAME

EP 1 206 137 A1

*Fig.5A*
a-CHANNEL ENCODED DATA

1 FRAME

Va1 | A a1 | Va2 | A a2 | Va3 | A a3 | Va4 | A a4

*Fig.5B*
b-CHANNEL ENCODED DATA

Vb1 | A a1 | Vb2 | A b2 | Vb3 | A b3 | Vb4 | A b4

*Fig.5C*
c-CHANNEL ENCODED DATA

Vc1 | A c1 | Vc2 | A c2 | Vc3 | A c3 | Vc4 | A c4

*Fig.5D*
COMPRESSING AND RECORDING DATA FOR EACH CHANNEL

Va1 | Vb1 | Vc1 | A A A a1 b1 c1 | Va2 | Vb2 | Vc2 | A A A a2 b2 c2 | Va3 | Vb3 | Vc3 | A A A a3 b3 c3 | Va4 | Vb4 | Vc4 | A A A a4 b4 c4

18

*Fig.5E*
a-CHANNEL PLAYBACK

Va1 | A a1 | Va2 | A a2 | Va3 | A a3 | Va4 | A a4

*Fig.5F*
b-CHANNEL PLAYBACK

Vb1 | A b1 | Vb2 | A b2 | Vb3 | A b3 | Vb4 | A b4

*Fig.5G*
c-CHANNEL PLAYBACK

Vc1 | A c1 | Vc2 | A c2 | Vc3 | A c3 | Vc4 | A c4

# Fig.6

AUDIO DATA a,b,·····Nch

VIDEO DATA

10
9
11 MULTICHANNEL TUNER CIRCUIT
ach bch Nch
12 VIDEO/AUDIO -SOURCE-DATA SEPARATING CIRCUIT
ach bch Nch
35 VIDEO-DATA COMPRESSING CIRCUIT
ach bch Nch
16 RECORD FORMATTER
19 RECORD- ENCODING MODULATION CIRCUIT
20 LASER DRIVING CIRCUIT
21
6

34 ATTRIBUTE-DATA DETECTING CIRCUIT
36 RECORD -CHANNEL-DATA -COMPRESSION -RATIO DETERMINING CIRCUIT
13 SYSTEM CONTROLLER
14 USER OPERATION SECTION

24 PLAYBACK -CHANNEL DETERMINING CIRCUIT

SPEAKER 29
28 AUDIO -SIGNAL PROCESSING CIRCUIT
27 AUDIO DECODING CIRCUIT
26 VIDEO/AUDIO -PLAYBACK -FRAME SEPARATING CIRCUIT
25 PLAYBACK -CHANNEL -TIME -DIVISION SELECTION CIRCUIT
23 PLAYBACK -DECODING -DEMODULATING CIRCUIT
22 EQUALIZER AND DIGITIZING CIRCUIT

32 MONITOR
31 VIDEO -SIGNAL PROCESSING CIRCUIT
30 VIDEO DECODING CIRCUIT

EP 1 206 137 A1

## Fig.7A
a-CHANNEL
ENCODED DATA

1 FRAME

| Va1 | A a1 | | Va2 | A a2 | | Va3 | A a3 | | Va4 | A a4 |

## Fig.7B
b-CHANNEL
ENCODED DATA

| Vb1 | A b1 | | Vb2 | A b2 | | Vb3 | A b3 | | Vb4 | A b4 |

## Fig.7C
c-CHANNEL
ENCODED DATA

| Vc1 | A c1 | | Vc2 | A c2 | | Vc3 | A c3 | | Vc4 | A c4 |

## Fig.7D
COMPRESSING AND
RECORDING DATA
FOR EACH CHANNEL

| Va1 | Vb1 | Vc1 | A a1 | A b1 | A c1 | | Va2 | Vb2 | Vc2 | A a2 | A b2 | A c2 | | Va3 | Vb3 | Vc3 | A a3 | A b3 | A c3 | | Va4 | Vb4 | Vc4 | A a4 | A b4 | A c4 |

## Fig.7E
a-CHANNEL
PLAYBACK

| Va1 | A a1 | | Va2 | A a2 | | Va3 | A a3 | | Va4 | A a4 |

## Fig.7F
b-CHANNEL
PLAYBACK

| Vb1 | A b1 | | Vb2 | A b2 | | Vb3 | A b3 | | Vb4 | A b4 |

## Fig.7G
c-CHANNEL
PLAYBACK

| Vc1 | A c1 | | Vc2 | A c2 | | Vc3 | A c3 | | Vc4 | A c4 |

EP 1 206 137 A1

**Fig.8A**
a-CHANNEL ENCODED DATA

**Fig.8B**
b-CHANNEL ENCODED DATA

**Fig.8C**
c-CHANNEL ENCODED DATA

**Fig.8D**
COMPRESSING AND RECORDING DATA FOR EACH CHANNEL

**Fig.9A**
a-CHANNEL ENCODED DATA

1 FRAME

| Va1 | A a1 | | Va2 | A a2 | | Va3 | A a3 | : : : | Van | A an |

**Fig.9B**
b-CHANNEL ENCODED DATA

| Vb1 | A b1 | | Vb2 | A b2 | | Vb3 | A b3 | : : : | Vbn | A bn |

**Fig.9C**
c-CHANNEL ENCODED DATA

| Vc1 | A c1 | | Vc2 | A c2 | | Vc3 | A c3 | : : : | Vcn | A cn |

**Fig.9D**
COMPRESSION AND INTERMITTENT RECORDING OF DATA FOR EACH CHANNEL

2

Va1 Vb1 Vc1 A a1 A b1 A c1  3  Va2 Vb2 Vc2 A a2 A b2 A c2  3  Va3 Vb3 Vc3 A a3 A b3 A c3 : : : Van Vbn Vcn A an A bn A cn

**Fig.9E**
RECORD DATA ARRANGEMENT ON REAL TRACK

6        6

Va1 Vb1 Vc1 A a1 A b1 A c1  Va2 Vb2 Vc2 A a2 A b2 A c2  Va3 Vb3 Vc3 A a3 A b3 A c3 · · · Van Vbn Vcn A an A bn A cn

DATA CAPACITY OF FREE AREA OF OPTICAL-DISK

5

**Fig.9F**
a-CHANNEL INTERMITTENT PLAYBACK

| Va1 | A a1 | 4 | Va2 | A a2 | 4 | Va3 | A a3 | 5 : : · · | Van | A an |

**Fig.9G**
b-CHANNEL INTERMITTENT PLAYBACK

| Vb1 | A b1 | 4 | Vb2 | A b2 | 4 | Vb3 | A b3 | : : : | Vbn | A bn |

**Fig.9H**
c-CHANNEL INTERMITTENT PLAYBACK

| Vc1 | A c1 | 4 | Vc2 | A c2 | 4 | Vc3 | A c3 | : : : ·· | Vcn | A cn |

EP 1 206 137 A1

Fig.10A
a-CHANNEL ENCODED DATA

Fig.10B
b-CHANNEL ENCODED DATA

Fig.10C
c-CHANNEL ENCODED DATA

Fig.10D
THINNING OUT AND INTERMITTETLY RECORDING VIDEO FRAMES

Fig.10E
RECORD DATA ARRANGEMENT ON REAL TRACK

DATA CAPACITY OF FREE AREA OF OPTICAL-DISK

Fig.10F
a-CHANNEL INTERMITTENT PLAYBACK

Fig.10G
b-CHANNEL INTERMITTENT PLAYBACK

Fig.10H
c-CHANNEL INTERMITTENT PLAYBACK

EP 1 206 137 A1

*Fig.11A*

a-CHANNEL
ENCODED DATA

| 1 FRAME |

| Va1 | A a1 | | Va2 | A a2 | | Va3 | A a3 | | Va4 | A a4 |

*Fig.11B*

b-CHANNEL
ENCODED DATA

| Vb1 | A b1 | | Vb2 | A b2 | | Vb3 | A b3 | | Vb4 | A b4 |

*Fig.11C*

c-CHANNEL
ENCODED DATA

| Vc1 | A c1 | | Vc2 | A c2 | | Vc3 | A c3 | | Vc4 | A c4 |

*Fig.11D*

TIME-SEQUENCE
ARRANGEMENT

| Va1 | A a1 | | Vb1 | A b1 | | Vc1 | A c1 | | Va2 | A a2 |

*Fig.11E*

TRIPLE-RATE
RECORDING

A a1 | Va1 | A b1 | Vb1 | A c1 | Vc1 | A a2 | Va2 | A b2 | Vb2 | A c2 | Vc2 | A a3 | Va3 | A b3 | Vb3 | A c3 | Vc3 | A a4 | Va4 | A b4 | Vb4 | A c4 | Vc4

*Fig.11F*

a-CHANNEL
PLAYBACK

A a1 | Va1 | A a2 | Va2 | A a3 | Va3 | A a4 | Va4

*Fig.11G*

b-CHANNEL
PLAYBACK

A b1 | Vb1 | A b2 | Vb2 | A b3 | Vb3 | A b4 | Vb4

*Fig.11H*

c-CHANNEL
PLAYBACK

A c1 | Vc1 | A c2 | Vc2 | A c3 | Vc3 | A c4 | Vc4

Fig.12

## INTERNATIONAL SEARCH REPORT

| International application No. |
| --- |
| PCT/JP00/04746 |

**A. CLASSIFICATION OF SUBJECT MATTER**
Int.Cl$^7$  H04N 5/92, G11B 20/10

According to International Patent Classification (IPC) or to both national classification and IPC

**B. FIELDS SEARCHED**

Minimum documentation searched (classification system followed by classification symbols)
Int.Cl$^7$  H04N 5/92, G11B 20/10

Documentation searched other than minimum documentation to the extent that such documents are included in the fields searched
Jitsuyo Shinan Koho      1922-1996    Toroku Jitsuyo Shinan Koho  1994-2000
Kokai Jitsuyo Shinan Koho  1971-2000    Jitsuyo Shinan Toroku Koho  1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP, 9-307854, A (Sony Corporation), 28 November, 1997 (28.11.97)  (Family: none) | 1-8,10-11, 13-32,34-35, 37-38 |
| A | | 9,12,33,36 |
| X | JP, 11-134795, A (Sanyo Electric Co., Ltd.), 21 May, 1999 (21.05.99)  (Family: none) | 1,5,7,8,11, 13-15,19-22, 24,25,29-32, 35,37,38 |
| A | | 2-4,6,9,10,12, 16-18,23, 26-28,33,34,36 |
| X | JP, 8-172645, A (Sanyo Electric Co., Ltd.), 02 July, 1996 (02.07.96)  (Family: none) | 1,3,5-8,15, 17,20-22,25, 27,30-32 |
| A | | 2,4,9-14,16, 18,19,23,24, 26,28,29,33-38 |
| X | JP, 5-111057, A (Toshiba Corporation), 30 April, 1993 (30.04.93)  (Family: none) | 1-3,6-8,15-22, 25-27,30-32 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 October, 2000 (24.10.00) | 07 November, 2000 (07.11.00) |

| Name and mailing address of the ISA/ | Authorized officer |
| --- | --- |
| Japanese Patent Office | |
| Facsimile No. | Telephone No. |

Form PCT/ISA/210 (second sheet) (July 1992)